# EUROPEAN PATENT APPLICATION

(11) **EP 4 818 798 A1**
(43) Date of publication of application: **07.10.2026**
(21) Application number: 24922412.2
(22) Date of filing: 26.11.2024
(51) Int. Cl.: G02F 1/13357, G02F 1/1333

(54) **DISPLAY APPARATUS**

(30) Priority: 02.02.2024 KR 20240016439
(71) Applicant: Samsung Electronics Co., Ltd., Suwon-si, Gyeonggi-do 16677 (KR)
(72) Inventor: LEE, Hansol, Suwon-si Gyeonggi-do 16677 (KR); KANG, Daejong, Suwon-si Gyeonggi-do 16677 (KR); KIM, Songhyeon, Suwon-si Gyeonggi-do 16677 (KR); KIM, Joowon, Suwon-si Gyeonggi-do 16677 (KR); LIM, Joohyun, Suwon-si Gyeonggi-do 16677 (KR)
(74) Representative: Appleyard Lees IP LLP
(86) International application number: PCT/KR2024/018864
(87) International publication number: WO 2025/164903

(57) **Abstract**

A display apparatus comprises: a display panel; a plurality of light sources configured to provide light to the display panel; a plurality of light source substrates on which the plurality of light sources are mounted; a bottom chassis supporting the plurality of light source substrates; an optical member disposed between the display panel and the plurality of light sources; and a support plate detachably mounted on the bottom chassis. The support plate comprises: a support portion for maintaining an optical distance between the plurality of light sources and the optical member; and a plate avoidance portion formed to prevent interference with the plurality of light sources when the support plate is mounted on the bottom chassis.

## Description

### [Technical Field]

The present disclosure relates to a display apparatus including a backlight unit.

### [Background Art]

A display apparatus is a kind of an output apparatus that converts obtained or stored electrical information into visual information and displays the visual information to a user, and the display apparatus is used in various fields, such as home or workplace.

The display apparatus includes a monitor apparatus connected to a personal computer or a server computer, a portable computer device, a navigation terminal device, a general television apparatus, an Internet Protocol television (IPTV), a portable terminal device, such as a smart phone, a tablet PC, a personal digital assistant (PDA) or a cellular phone, various display apparatuses used to reproduce images, such as advertisements or movies in an industrial field, or various kinds of audio/video systems.

The display apparatus includes a light source module to convert electrical information into visual information, and the light source module includes a plurality of light sources to independently emit light.

Each of the plurality of light sources includes a light emitting diode (LED) or an organic light emitting diode (OLED). For example, the LED or the OLED may be mounted on a circuit board or substrate.

### [Disclosure]

### [Technical Problem]

The present disclosure is directed to providing a display apparatus with an improved assembly structure.

Further, the present disclosure is directed to providing a display apparatus capable of making maintenance and/or repair easier.

Further, the present disclosure is directed to providing a display apparatus with improved structural stability.

Additional aspects of the disclosure will be set forth in part in the description which follows and, in part, will be obvious from the description, or may be learned by practice of the disclosure.

### [Technical Solution]

A display apparatus according to an aspect of the present disclosure comprises a display panel, a plurality of light sources configured to provide light to the display panel, a plurality of light source substrates on which the plurality of light sources is mounted, a bottom chassis supporting the plurality of light source substrates, an optical member disposed between the display panel and the plurality of light sources, and a support plate detachably mounted on the bottom chassis. The support plate includes a support portion for maintaining an optical distance between the plurality of light sources and the optical member, and a plate avoidance portion formed to prevent interference with the plurality of light sources in response to the support plate being mounted on the bottom chassis.

A display apparatus according to an aspect of the present disclosure comprises a display panel, a plurality of light sources configured to provide light to the display panel, a plurality of light source substrates on which the plurality of light sources is mounted, a bottom chassis supporting the plurality of light source substrates, a plurality of substrate fixers provided to fix the plurality of light source substrates to the bottom chassis, an optical member disposed between the display panel and the plurality of light sources, and a support plate detachably mounted on the bottom chassis. The support plate includes a support portion for maintaining an optical distance between the plurality of light sources and the optical member, and a plate body provided to press at least one of the plurality of light source substrates to the bottom chassis in response to the support plate being mounted to the bottom chassis.

### [Description of Drawings]

FIG. 1 illustrates a display apparatus according to an embodiment of the present disclosure.
FIG. 2 illustrates an exploded view of the display apparatus according to an embodiment of the present disclosure.
FIG. 3 illustrates an enlarged cross-sectional view of a portion of a display module of the display apparatus according to an embodiment of the present disclosure.
FIG. 4 illustrates an enlarged view of a light source and a reflective sheet of the display apparatus according to an embodiment of the present disclosure.
FIG. 5 illustrates a light source substrate and a bottom chassis of the display apparatus according to an embodiment of the present disclosure.
FIG. 6 illustrates an enlarged view of a portion of the light source substrate and the bottom chassis of the display apparatus according to an embodiment of the present disclosure.
FIG. 7 illustrates an enlarged view of a portion of a substrate bar and the bottom chassis of the display apparatus according to an embodiment of the present disclosure.
FIG. 8 illustrates the substrate bar of the display apparatus according to an embodiment of the present disclosure and a bar fixer coupled thereto.
FIG. 9 illustrates the bar fixer of the display apparatus according to an embodiment of the present disclosure.
FIG. 10 illustrates a mounting portion provided on the bottom chassis of the display apparatus according to an embodiment of the present disclosure.
FIG. 11 illustrates a state before the light source substrate of the display apparatus according to an embodiment of the present disclosure is mounted on the bottom chassis.
FIG. 12 illustrates a state after the light source substrate of the display apparatus according to an embodiment of the present disclosure is mounted on the bottom chassis.
FIG. 13 illustrates a state before the light source substrate of the display apparatus according to an embodiment of the present disclosure is mounted on the bottom chassis.
FIG. 14 illustrates a state after the light source substrate of the display apparatus according to an embodiment of the present disclosure is mounted on the bottom chassis.
FIG. 15 is an enlarged view of a portion of a substrate body before the light source substrate of the display apparatus according to an embodiment of the present disclosure is mounted on the bottom chassis.
FIG. 16 is an enlarged view of a portion of the substrate body after the light source substrate of the display apparatus according to an embodiment of the present disclosure is mounted on the bottom chassis.
FIG. 17 illustrates a state before a light source substrate of a display apparatus according to an embodiment of the present disclosure is mounted on a bottom chassis.
FIG. 18 illustrates a state after the light source substrate of the display apparatus according to an embodiment of the present disclosure is mounted on the bottom chassis.
FIG. 19 illustrates a link of the display apparatus according to an embodiment of the present disclosure.
FIG. 20 illustrates a front surface of a single substrate material for manufacturing the plurality of light source substrates of the display apparatus according to an embodiment of the present disclosure.
FIG. 21 illustrates a rear surface of the single substrate material for manufacturing the plurality of light source substrates of the display apparatus according to an embodiment of the present disclosure.
FIG. 22 illustrates a front surface of a single substrate material for manufacturing a plurality of light source substrates of a display apparatus according to an embodiment of the present disclosure.
FIG. 23 illustrates a rear surface of the single substrate material for manufacturing the plurality of light source substrates of the display apparatus according to an embodiment of the present disclosure.
FIG. 24 illustrates an upper portion of a support plate of the display apparatus according to an embodiment of the present disclosure.
FIG. 25 illustrates a lower portion of the support plate of the display apparatus according to an embodiment of the present disclosure.
FIG. 26 illustrates a portion of a cross-section before mounting the support plate according to an embodiment of the present disclosure to the bottom chassis.
FIG. 27 illustrates a portion of a rear surface of the bottom chassis before mounting the support plate according to an embodiment of the present disclosure to the bottom chassis.
FIG. 28 illustrates a portion of a cross-section after mounting the support plate according to an embodiment of the present disclosure to the bottom chassis.
FIG. 29 illustrates a portion of the rear surface of the bottom chassis after mounting the support plate according to an embodiment of the present disclosure to the bottom chassis.
FIG. 30 illustrates a portion of a cross-section illustrating a state in which the support plate according to an embodiment of the present disclosure supports an optical member.
FIG. 31 illustrates an upper portion of a support plate of a display apparatus according to an embodiment of the present disclosure.
FIG. 32 illustrates a lower portion of the support plate of the display apparatus according to an embodiment of the present disclosure.
FIG. 33 illustrates a state before mounting the support plate according to an embodiment of the present disclosure to a bottom chassis.
FIG. 34 illustrates a portion of a rear surface of the bottom chassis before mounting the support plate according to an embodiment of the present disclosure to the bottom chassis.
FIG. 35 illustrates a state after mounting the support plate according to an embodiment of the present disclosure to the bottom chassis.
FIG. 36 illustrates a portion of the rear surface of the bottom chassis after mounting the support plate according to an embodiment of the present disclosure to the bottom chassis.
FIG. 37 illustrates an upper portion of a support plate of a display apparatus according to an embodiment of the present disclosure.
FIG. 38 illustrates a lower portion of the support plate of the display apparatus according to an embodiment of the present disclosure.
FIG. 39 illustrates a state before mounting the support plate according to an embodiment of the present disclosure to a bottom chassis.
FIG. 40 illustrates a portion of a rear surface of the bottom chassis before mounting the support plate according to an embodiment of the present disclosure to the bottom chassis.
FIG. 41 illustrates a state after mounting the support plate according to an embodiment of the present disclosure to the bottom chassis.
FIG. 42 illustrates a portion of the rear surface of the bottom chassis after mounting the support plate according to an embodiment of the present disclosure to the bottom chassis.

### [Modes of the Invention]

Various embodiments and terms used therein are not intended to limit the technology disclosed herein to specific forms, and the disclosure should be understood to include various modifications, equivalents, and/or alternatives to the corresponding embodiments.

In addition, the same reference numerals or signs shown in the drawings of the disclosure indicate elements or components performing substantially the same function.

A singular expression may include a plural expression unless otherwise indicated herein or clearly contradicted by context.

The expressions "A or B," "at least one of A or/and B," or "one or more of A or/and B," A, B or C," "at least one of A, B or/and C," or "one or more of A, B or/and C," and the like used herein may include any and all combinations of one or more of the associated listed items.

Terms such as "unit", "module", and "member" may be embodied as hardware or software. According to embodiments, a plurality of "unit", "module", and "member" may be implemented as a single component or a single "unit", "module", and "member" may include a plurality of components.

Also, the terms used herein are used to describe the embodiments and are not intended to limit and / or restrict the disclosure. The singular forms "a," "an" and "the" are intended to include the plural forms as well, unless the context clearly indicates otherwise. In this disclosure, the terms "including", "having", and the like are used to specify features, numbers, steps, operations, elements, components, or combinations thereof, but do not preclude the presence or addition of one or more of the features, numbers, steps, operations, elements, components, or combinations thereof.

It will be understood that, although the terms first, second, third, etc., may be used herein to describe various elements, but elements are not limited by these terms. These terms are only used to distinguish one element from another element. For example, without departing from the scope of the disclosure, a first element may be termed as a second element, and a second element may be termed as a first element. The term of "and / or" includes a plurality of combinations of relevant items or any one item among a plurality of relevant items.

When an element (e.g., a first element) is referred to as being "(functionally or communicatively) coupled," or "connected" to another element (e.g., a second element), the first element may be connected to the second element, directly (e.g., wired), wirelessly, or through a third element.

When an element is said to be "connected", "coupled", "supported" or "contacted" with another element, this includes not only when elements are directly connected, coupled, supported or contacted, but also when elements are indirectly connected, coupled, supported or contacted through a third element.

Throughout the description, when an element is "on" another element, this includes not only when the element is in contact with the other element, but also when there is another element between the two elements.

In the following detailed description, the terms of "up and down direction", "front and rear direction" and the like may be defined by the drawings, but the shape and the location of the element is not limited by the term. For example, the terms "front" and "rear" below may each be defined based on the X direction shown in the drawings. The terms "upward" and "downward" below may each be defined based on the Z direction shown in the drawing. The terms "left direction" and "right direction" below may be defined based on the Y direction shown in the drawing. The term "vertical direction" below may refer to the Z direction shown in the drawings, and the term "horizontal direction" below may refer to the Y direction shown in the drawings.

Hereinafter example embodiments of the present disclosure will be described in detail with reference to the accompanying drawings.

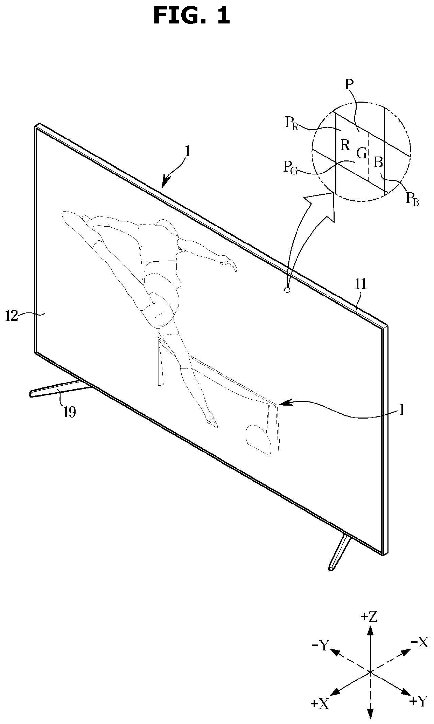

FIG. 1 illustrates a display apparatus according to an embodiment of the present disclosure.

Referring to FIG. 1, a display apparatus 1 according to one embodiment of the present disclosure is a device that processes an image signal received from an outside and visually displays the processed image. Hereinafter a case in which the display apparatus 1 is a television is exemplified, but the present disclosure is not limited thereto. For example, the display apparatus 1 may be implemented in various forms, such as a monitor which is a type of computer output device, a portable multimedia device, and a portable communication device, and the display apparatus 1 is not limited in the type thereof as long as the display apparatus is configured to visually display an image.

The display apparatus 1 may be a large format display (LFD) installed outdoors, such as a roof of a building or a bus stop. The outdoor is not limited to the outside of a building, and thus the display apparatus 1 according to one embodiment may be installed in any places as long as the display apparatus is accessed by a large number of people, even indoors, such as subway stations, shopping malls, movie theaters, companies, and stores.

FIG. 1 illustrates a flat display apparatus with a flat screen as an example of the display apparatus 1, but the present disclosure is not limited thereto. Therefore, the display apparatus according to the present disclosure may be applied to a curved display apparatus or a bendable or flexible display apparatus in which a flat state and a curved state are variable. Further, a configuration of the present disclosure may be applied to display apparatus of various shapes regardless of a screen size or ratio of the display apparatus.

The display apparatus 1 may receive content data including video signals and audio signals from various content sources and output video and audio corresponding to the video signals and the audio signals. For example, the display apparatus 1 may receive content data through a broadcast reception antenna or cable, receive content data from a content playback device, or receive content data from a content providing server of a content provider.

The display apparatus 1 may display an image corresponding to video data and output sound corresponding to audio data. For example, the display apparatus 1 may restore a plurality of image frames included in video data and continuously display the plurality of image frames. Further, the display apparatus 1 may restore an audio signal included in the audio data and continuously output sound according to the audio signal.

As illustrated in FIG. 1, the display apparatus 1 may include a main body 11, and a screen 12 provided to display an image I.

The display apparatus 1 may be installed on an indoor or outdoor floor or furniture in a standing manner, or may be installed on a wall or inside a wall in a wall-mounted manner. For example, the display apparatus 1 may include a support leg 19 provided in a lower portion of the main body 11 to be installed on the indoor or outdoor floor or furniture in the standing manner.

The main body 11 may form an appearance of the display apparatus 1. A component configured to allow the display apparatus 1 to display the image I and to perform various functions may be provided in the main body 11.

The display apparatus 1 may be configured to display the image I. Particularly, the screen 12 may be formed on a front surface of the main body 11, and the display apparatus 1 may display the image I on the screen 12. For example, the screen 12 may display a still image or a moving image. Further, the screen 12 may display a two-dimensional plane image or a three-dimensional image using binocular parallax of the user.

A plurality of pixels P may be formed on the screen 12. The image I displayed on the screen 12 may be formed by a combination of the lights emitted from the plurality of pixels P. For example, the image I may be formed on the screen 12 by combining light emitted from the plurality of pixels P as a mosaic.

Each of the plurality of pixels P may emit different brightness and different color of light. Particularly, the plurality of pixels P may include sub-pixels P_{R}, P_{G}, and P_{B}, respectively, and the sub-pixels P_{R}, P_{G}, and P_{B} may include a red sub pixel P_{R} emitting red light, a green sub pixel P_{G} emitting green light, and a blue sub pixel P_{B} emitting blue light. For example, the red light may represent a light beam having a wavelength of approximately 620 nm (nanometers, one billionth of a meter) to 750 nm, the green light may represent a light beam having a wavelength of approximately 495 nm to 570 nm, and the blue light may represent a light beam having a wavelength of approximately 450 nm to 495 nm.

By combining the red light of the red sub pixel P_{R}, the green light of the green sub pixel P_{G} and the blue light of the blue sub pixel P_{B}, each of the plurality of pixels P may emit different brightness and different color of light.

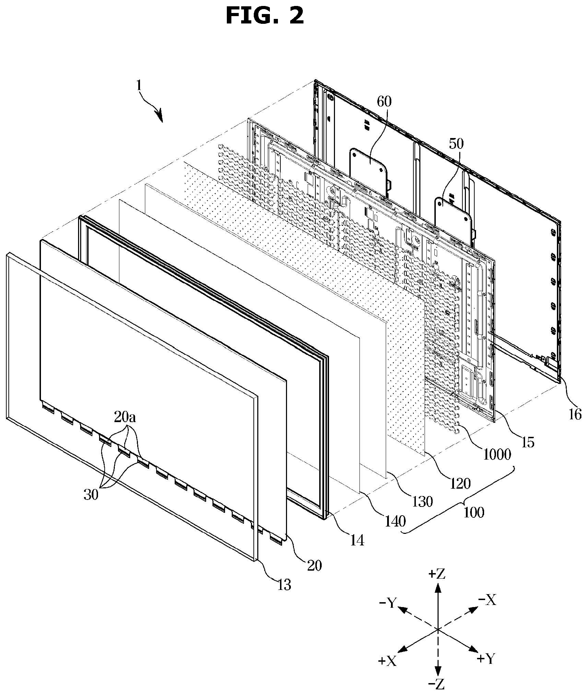

FIG. 2 illustrates an exploded view of the display apparatus according to an embodiment of the present disclosure.

Referring to FIG. 2, various components for generating an image I on the screen 12 may be disposed inside the main body 11 of the display apparatus 1 according to one embodiment of the present disclosure.

For example, the display apparatus 1 may include a display panel 20. The display panel 20 may be disposed on the main body 11. The display panel 20 may be provided to display the image I. The screen 12 described in FIG. 1 may be formed on a front surface of the display panel 20.

For example, the display panel 20 may have a substantially rectangular shape. Particularly, the display panel 20 may have a shape in which a length of the horizontal side and a length of the vertical side are different from each other. That is, the display panel 20 may be provided to have a long side and a short side. The display panel 20 may be provided in a rectangular plate shape. However, the present disclosure is not limited thereto, and the display panel 20 may be provided in the shape of a square plate in which lengths of the long and short sides are approximately equal.

The display panel 20 may be provided in various sizes. The ratio between the long side and the short side of the display panel 20 is not limited to general cases such as 16:9 and 4:3, but may be provided at any ratio.

In the display apparatus 1 according to one embodiment of the present disclosure, the display panel 20 may be composed of a non-self luminous display panel such as a liquid crystal display (LCD).

A cable 20a configured to transmit image data to the display panel 20, and a display driver integrated circuit (DDI) (hereinafter referred to as 'driver IC') 30 configured to process digital image data and output an analog image signal may be provided at one side of the display panel 20.

The cable 20a may electrically connect a control assembly 50/ a power assembly 60 to the driver IC 30, and may also electrically connect the driver IC 30 to the display panel 20. The cable 20a may include a flexible flat cable or a film cable that is bendable.

The driver IC 30 may receive image data and power from the control assembly 50/ the power assembly 60 through the cable 20a. The driver IC 30 may provide the image data and driving current to the display panel 20 through the cable 20a.

In addition, the cable 20a and the driver IC 30 may be integrally implemented as a film cable, a chip on film (COF), or a tape carrier package (TCP). In other words, the driver IC 30 may be arranged on the cable 20b. However, the present disclosure is not limited thereto, and the driver IC 30 may be arranged on the display panel 20.

A structure of the display panel 20 will be described later.

The display apparatus 1 may include a backlight unit 100 configured to emit light toward the display panel 20. The backlight unit 100 may be disposed in the main body 11. The backlight unit 100 may be arranged at the rear of the display panel 20 to emit light toward the front where the display panel 20 is located. Particularly, the backlight unit 100 may be provided as a surface light source. The display panel 20 may block or pass light emitted from the backlight unit 100.

The backlight unit 100 may include a point light source configured to emit monochromatic light or white light. The backlight unit 100 may refract, reflect, and scatter light in order to convert light, which is emitted from the point light source, into uniform surface light. The backlight unit 100 may refract, reflect, and scatter light emitted from the point light source, thereby emitting uniform surface light toward the front side.

As illustrated in FIG. 2, the backlight unit 100 may include a light source module 1000. The light source module 1000 may generate and emit light. Particularly, the light source module 1000 may be configured to emit monochromatic light or white light.

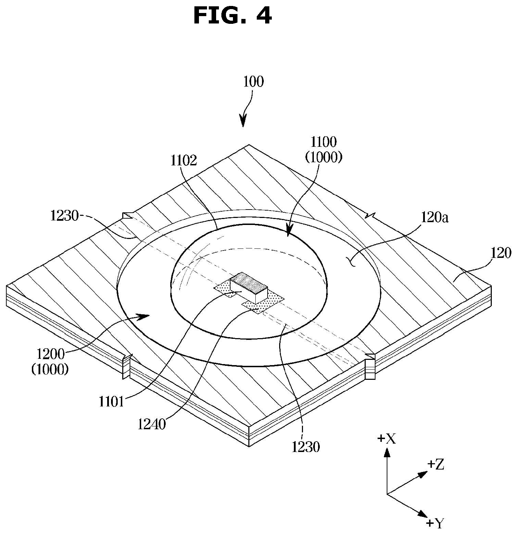

The light source module 1000 may include a plurality of light sources 1100 configured to emit light, and a light source substrate 1200 on which the plurality of light sources 1100 is mounted (refer to FIG. 4, etc.).

The light source module 1000 will be described later.

As illustrated in FIG. 2, the backlight unit 100 may include a reflective sheet 120 provided to reflect light. The reflective sheet 120 may reflect light forward or in a direction close to the front.

For example, the reflective sheet 120 may be attached to a front surface of the light source module 1000. Particularly, the reflective sheet 120 may be attached to a front surface of the light source substrate 1200.

For example, in front of the reflective sheet 120, the light source module 1000 (particularly, the light source 1100 of the light source module 1000, refer to FIG. 4) may emit light in various directions. The light emitted from the light source module 1000 may not only be emitted toward a diffuser plate 130, which will be described later, but the light may also be emitted from the light source module 1000 toward the reflective sheet 120. The reflective sheet 120 may reflect the light, which is emitted toward the reflective sheet 120, toward the diffuser plate 130.

Further, while the light emitted from the light source module 1000 passes through various objects such as the diffuser plate 130 and an optical sheet 140, a portion of the light may be reflected from a surface of the diffuser plate 130 and the optical sheet 140. The reflective sheet 120 may reflect the light, which is reflected by the above-mentioned reason, forward again.

As illustrated in FIG. 2, the backlight unit 100 may include the diffuser plate 130 provided to uniformly diffuse light. The diffuser plate 130 may be provided in front of the light source module 1000 and the reflective sheet 120. The diffuser plate 130 may evenly disperse the light emitted from the light source module 1000 and then emit the light forward.

As illustrated in FIG. 2, the backlight unit 100 may include the optical sheet 140 provided to further improve the luminance and uniformity of the luminance of the emitted light. The optical sheet 140 may be provided to refract and scatter light emitted from the front of the diffuser plate 130. For example, the optical sheet 140 may include various types of sheets, such as a diffusion sheet, a prism sheet, a reflective polarizing sheet, and a quantum dot sheet.

The diffuser plate 130 and the optical sheet 140 may be referred to as optical members 130 and 140.

The display apparatus 1 may include the control assembly 50 configured to control the operation of the backlight unit 100 and the display panel 20, and the power assembly 60 configured to supply power to the backlight unit 100 and the display panel 20. The control assembly 50 and the power assembly 60 may be disposed in the main body 11.

For example, the control assembly 50 may include a control circuit configured to control an operation of the display panel 20 and the backlight unit 100. The control circuit may process image data received from an external content source, transmit image data to the display panel 20, and transmit dimming data to the backlight unit 100.

For example, the power assembly 60 may supply power to the display panel 20 and the backlight unit 100 so as to allow the backlight unit 100 to emit surface light and to allow the display panel 20 to block or pass the light emitted from the backlight unit 100.

The control assembly 50 and the power assembly 60 may be implemented as a printed circuit board and various circuits mounted on the printed circuit board. For example, the power circuit may include a capacitor, a coil, a resistance element, a processor, and a power circuit board on which the capacitor, the coil, the resistance element, and the processor are mounted. Further, the control circuit may include a memory, a processor, and a control circuit board on which the memory and the processor are mounted.

The display apparatus 1 may include a display case provided to support various components of the main body 11 of the display apparatus 1. In other words, various components of the main body 11 may be accommodated inside the display case. The display case may form the external appearance of the display apparatus 1.

For example, the display case may support the display panel 20. For example, the display case may support the backlight unit 100. For example, the display case may support the control assembly 50. For example, the display case may support the power assembly 60.

For example, the display apparatus 1 may include a top chassis 13. The top chassis 13 may include a top chassis 13 provided to support a front surface or side surface of the display panel 20. For example, the top chassis 13 may be provided in a substantially quadrangle frame shape.

The top chassis 13 may support the front surface of the display panel 20 by forming a bezel that is disposed to face the front of the display apparatus 1. However, when the display apparatus 1 is a bezel-less type display apparatus with a very narrow or no bezel, the top chassis 13 may be provided to support only the side surface of the display panel 20. Alternatively, when a bottom chassis 15 supports the side surface of the display panel 20, the display apparatus 1 may not include the top chassis 13.

For example, the display apparatus 1 may include the bottom chassis 15. The bottom chassis 15 may cover the rear of the display panel 20. The bottom chassis 15 may be coupled to the rear of the top chassis 13. The bottom chassis 15 may support various components of the display apparatus 1, such as the backlight unit 100, the control assembly 50, and the power assembly 60.

The bottom chassis 15 may be formed to have a substantially flat plate shape, but is not limited thereto. The bottom chassis 15 may be formed of a material with high thermal conductivity to dissipate heat generated from the light source 1100 to the outside. For example, the bottom chassis 15 may be formed of a metal material such as aluminum or SUS, or a plastic material such as ABS.

For example, the display apparatus 1 may include a middle mold 14. The middle mold 14 may be disposed between the top chassis 13 and the bottom chassis 15. For example, the middle mold 14 may support at least some components of the backlight unit 100.

For example, the display apparatus 1 may include a rear cover 16. The rear cover 16 may be disposed at the rear of the bottom chassis 15 and provided to cover the bottom chassis 15 and various components mounted on the rear of the bottom chassis 15 (for example, the control assembly 50, the power assembly 60, and the like).

Meanwhile, unlike FIG. 2, the display case of the display apparatus 1 according to the present disclosure may not include some of the top chassis, the middle mold, the bottom chassis, and the rear cover.

The configuration of the display apparatus 1 described above with reference to FIG. 2 is only an example for describing the display apparatus according to the present disclosure, and the present disclosure is not limited thereto. The display apparatus according to the present disclosure may be provided to include various configurations to perform the function of providing images through a screen.

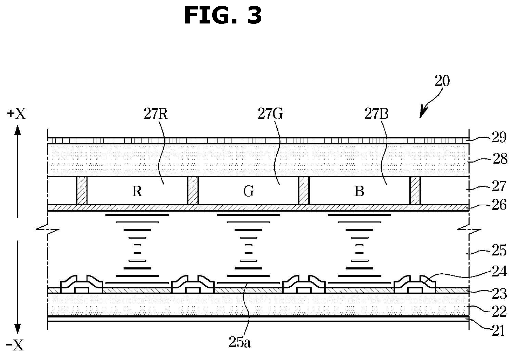

FIG. 3 illustrates an enlarged cross-sectional view of a portion of a display module of the display apparatus according to an embodiment of the present disclosure.

Referring to FIG. 3, the display panel 20 included in the display apparatus 1 according to one embodiment of the present disclosure may be composed of a liquid crystal display (LCD) panel, and configured to block or transmit light emitted from the backlight unit 100. The image I may be formed in front of the display panel 20 by an operation in which the display panel 20 blocks or transmits the light emitted from the backlight unit 100.

The front surface of the display panel 20 may form the screen 12 of the display apparatus 1 described above, and the plurality of pixels P may be provided in the display panel 20. In the display panel 20, the plurality of pixels P may independently block or transmit light of the backlight unit 100, and the light transmitted through the plurality of pixels P may form the image I displayed on the screen 12.

For example, as shown in FIG. 3, the display panel 20 may include a first polarizing film 21, a first transparent substrate 22, a pixel electrode 23, a thin film transistor 24, a liquid crystal layer 25, a common electrode 26, a color filter 27, a second transparent substrate 28, and a second polarizing film 29.

The first transparent substrate 22 and the second transparent substrate 28 may fixedly support the pixel electrode 23, the thin film transistor 24, the liquid crystal layer 25, the common electrode 26, and the color filter 27. The first and second transparent substrates 22 and 28 may be formed of tempered glass or transparent resin.

The first polarizing film 21 and the second polarizing film 29 may be provided on the outside of the first and second transparent substrates 22 and 28.

Each of the first polarizing film 21 and the second polarizing film 29 may transmit a specific light beam and block other light beams. For example, the first polarizing film 21 may transmit a light beam having a magnetic field vibrating in a first direction and block other light beams. In addition, the second polarizing film 29 may transmit a light beam having a magnetic field vibrating in a second direction and block other light beams. In this case, the first direction and the second direction may be perpendicular to each other. Accordingly, a polarization direction of the light transmitted through the first polarizing film 21 and a vibration direction of the light transmitted through the second polarizing film 29 may be perpendicular to each other. As a result, generally, light may not pass through the first polarizing film 21 and the second polarizing film 29 at the same time.

The color filter 27 may be provided on an inner side of the second transparent substrate 28.

The color filter 27 may include a red filter 27R transmitting red light, a green filter 27G transmitting green light, and a blue filter 27B transmitting blue light. The red filter 27R, the green filter 27G, and the blue filter 27B may be disposed in parallel with each other. A region, in which the color filter 27 is formed, may correspond to the pixel P described above. A region, in which the red filter 27R is formed, may correspond to the red sub-pixel P_{R}, a region, in which the green filter 27G is formed, may correspond to the green sub-pixel P_{G}, and a region, in which the blue filter 27B is formed, may correspond to the blue sub-pixel P_{B}.

The pixel electrode 23 may be provided on an inner side of the first transparent substrate 22, and the common electrode 26 may be provided on an inner side of the second transparent substrate 28.

The pixel electrode 23 and the common electrode 26 may be formed of a metal material through which electricity is conducted, and the pixel electrode 23 and the common electrode 26 may generate an electric field to change the arrangement of liquid crystal molecules 25a forming the liquid crystal layer 25 to be described below.

The pixel electrode 23 and the common electrode 26 may be formed of a transparent material, and may transmit light incident from the outside. For example, the pixel electrode 23 and the common electrode 26 may include indium tin oxide (ITO), indium zinc oxide (IZO), silver nanowire (Ag nano wire), carbon nanotube (CNT), graphene, or poly (3,4-ethylenedioxythiophene) (PEDOT). The thin film transistor (TFT) 24 may be provided in an inner side of the second transparent substrate 28.

The TFT 24 may transmit or block a current flowing through the pixel electrode 23. For example, an electric field may be formed or removed between the pixel electrode 23 and the common electrode 26 in response to turning on (closing) or turning off (opening) the TFT 24.

The TFT 24 may be formed of poly-silicon, and may be formed by semiconductor processes, such as lithography, deposition, and ion implantation.

The liquid crystal layer 25 may be formed between the pixel electrode 23 and the common electrode 26, and the liquid crystal layer 25 may be filled with the liquid crystal molecules 25a.

Liquid crystals represent an intermediate state between a solid (crystal) and a liquid. Most of the liquid crystal materials are organic compounds, and the molecular shape is in the shape of an elongated rod, and the orientation of molecules is in an irregular state in one direction, but in a regular state in other directions. As a result, the liquid crystal has both the fluidity of the liquid and the optical anisotropy of the crystal (solid).

In addition, liquid crystals also exhibit optical characteristics according to changes in an electric field. For example, in the liquid crystal, the orientation of molecules forming the liquid crystal may change according to a change in an electric field. When an electric field is generated in the liquid crystal layer 25, the liquid crystal molecules 25a of the liquid crystal layer 25 may be disposed along the direction of the electric field. When the electric field is not generated in the liquid crystal layer 25, the liquid crystal molecules 25a may be disposed irregularly or disposed along an alignment layer (not shown). As a result, the optical characteristics of the liquid crystal layer 25 may vary depending on the presence or absence of the electric field passing through the liquid crystal layer 25.

The structure of the display panel 20 described above with reference to FIG. 3 is only an example of a structure of the display panel of the display apparatus according to the present disclosure, and the present disclosure is not limited thereto.

FIG. 4 illustrates an enlarged view of a light source and a reflective sheet of the display apparatus according to an embodiment of the present disclosure.

Referring to FIG. 4, the display apparatus 1 according to one embodiment of the present disclosure may include the plurality of light sources 1100 and the light source substrate 1200 on which the light sources 1100 are mounted. The plurality of light sources 1100 and the light source substrate 1200 may form the light source module 1000 of the backlight unit 100.

FIG. 4 illustrates one light source 1100 among the plurality of light sources 1100 included in the light source module 1000, and a description of a structure and function of the light source 1100 described below with reference to FIG. 4 may be commonly applied to each of the plurality of light sources 1100.

The light source 1100 may be configured to emit light. The light source 1100 may be configured to emit light toward the display panel 20. The light source 1100 may employ an element configured to emit monochromatic light (light of a specific wavelength, for example, blue light) or white light (for example, light of a mixture of red light, green light, and blue light) in various directions by receiving power. For example, the light source 111 may include a light emitting diode (LED).

The light source substrate 1200 may fix the plurality of light sources 1100 to prevent a change in the position of the light source 1100. Further, the light source substrate 1200 may supply power, which is for the light source 1100 to emit light, to the light source 1100.

The light source substrate 1200 may fix the plurality of light sources 1100 and may be configured with synthetic resin or tempered glass or a printed circuit board (PCB) on which a conductive power supply line for supplying power to the light source 1100 is formed.

The light source 1100 may be disposed on the front surface of the light source substrate 1200. The front surface of the light source substrate 1200 may refer to one surface of the light source substrate 1200 facing the display panel 20. That is, the light source 1100 may be mounted on the light source substrate 1200 to face forward and emit light forward.

The reflective sheet 120 may be disposed in front of the light source substrate 1200. As described above, the reflective sheet 120 may be coupled to the front surface of the light source substrate 1200. At this time, the reflective sheet 120 may include a plurality of through-holes 120a formed at positions corresponding to each of the plurality of light sources 1100 of the light source module 1000. As shown in FIG. 4, the light source 1100 may pass through the through-hole 120a and protrude toward the front of the reflective sheet 120. As a result, the light source 1100 and a portion of the light source substrate 1200 may be exposed toward the front of the reflective sheet 120 through the through-hole 120a. With this configuration, the light source 1100 may emit light in front of the reflective sheet 120.

The reflective sheet 120 may reflect light, which is emitted from the light source 1100 toward the reflective sheet 120, toward the diffuser plate 130.

A process, in which the light emitted from the plurality of light sources 1100 or the light reflected by the reflective sheet 120 travels toward the display panel 20, is as described above.

Hereinafter a structure of the light source 1100 and the light source substrate 1200 will be described.

The light source 1100 may include a light emitting diode 1101. The light emitting diode 1101 may include a P-type semiconductor and an N-type semiconductor for emitting light by recombination of holes and electrons. In addition, the light emitting diode 1101 may be provided with a pair of electrodes for supplying hole and electrons to the P-type semiconductor and the N-type semiconductor, respectively.

The light emitting diode 1101 may be configured to convert electrical energy into optical energy. The light emitting diode 1101 may emit light having a maximum intensity at a predetermined wavelength based on the supplied power. For example, the light emitting diode 1101 may emit blue light having a peak value at a wavelength indicating blue color (for example, a wavelength between 430 nm and 495 nm).

For example, a multilayer reflective structure, in which a plurality of insulation layers having different refractive indices is alternately laminated, may be provided on the front surface of the light emitting diode 1101. For example, the multilayer reflective structure may be provided with a Distributed Bragg Reflector (DBR).

For example, the light emitting diode 1101 may be directly attached to the light source substrate 1200 in a Chip On Board (COB) method. In other words, the light source 1100 may include the light emitting diode 1101 to which a light emitting diode chip or a light emitting diode die is directly attached to the light source substrate 1200 without an additional packaging.

The light source module 1000 may be manufactured in such a way that the flip-chip type light emitting diode 1101 is attached to the light source substrate 1200 in a chip-on-board method. Accordingly, it is possible to reduce the size of the light source 1100.

The light source substrate 1200 may include a power supply line 1230 provided to supply power to the light source 1100. The power supply line 1230 may be provided to supply an electrical signal and/or power from the control assembly 50 and/or the power assembly 60 to the light source 1100. For example, the power supply line 1230 may be provided to supply power to the flip-chip type light emitting diode 1101.

For example, the light source substrate 1200 may be formed by alternately laminating an insulation layer that is non-conductive and a conduction layer that is conductive.

A line or pattern, through which power and/or electrical signals pass, may be formed on the conduction layer. The conduction layer may be formed of various materials having an electrical conductivity. For example, the conduction layer may be formed of various metal materials, such as copper (Cu), tin (Sn), aluminum (Al), or an alloy thereof. The power supply line 1230 may be implemented by the line or pattern formed on the conduction layer of the light source substrate 1200.

A dielectric of the insulation layer of the light source substrate 1200 may insulate between lines or patterns of the conduction layer. The insulation layer may be formed of a dielectric for electrical insulation, such as FR-4.

For example, a protection layer configured to prevent or suppress damages caused by an external impact and/or damages caused by a chemical action (for example, corrosion, etc.) and/or damages caused by an optical action, to the light source substrate 1200 may be formed on an outer surface of the light source substrate 1200. For example, the protection layer of the light source substrate 1200 may include a photo solder resist (PSR).

The power supply line 1230 may be covered by the protection layer of the light source substrate 1200, so as to be prevented from being exposed to the outside.

For example, the light source substrate 1200 may include a power supply pad 1240 provided to be electrically connected to the power supply line 1230 to supply power to the flip-chip type light emitting diode 1101. The power supply line 1230 may be electrically connected to the light emitting diode 1101 through the power supply pad 1240.

For example, a window may be formed in the protection layer of the light source substrate 1200 to expose a portion of the power supply line 1230 to the outside. The power supply pad 1240 may be electrically connected to a portion of the power supply line 1230 exposed to the outside of the light source substrate 1200.

For example, various electrically conductive adhesive materials such as solder and electrically conductive epoxy adhesives may be applied between the electrode of the light emitting diode 1101 and the power supply pad 1240.

The light source 1100 may include an optical dome 1102. The optical dome 1102 may cover the light emitting diode 1101. The optical dome 1102 may prevent or suppress damages to the light emitting diode 1101 caused by an external mechanical action and/or damage to the light emitting diode 1101 caused by a chemical action.

The optical dome 1102 may have a dome shape formed in such a way that a sphere is cut into a surface not including the center thereof, or may have a hemispherical shape in such a way that a sphere is cut into a surface including the center thereof. A vertical cross section of the optical dome 1102 may be a bow shape or a semicircle shape.

The optical dome 1102 may be formed of silicone or epoxy resin. For example, the molten silicon or epoxy resin may be discharged onto the light emitting diode 1101 through a nozzle, and the discharged silicon or epoxy resin may be cured, thereby forming the optical dome 1102.

The optical dome 1102 may be optically transparent or translucent. Light emitted from the light emitting diode 1101 may be emitted to the outside by passing through the optical dome 1102.

In this case, the dome-shaped optical dome 1102 may refract light like a lens. For example, light emitted from the light emitting diode 1101 may be refracted by the optical dome 1102 and thus may be dispersed.

The structure of the light source module 1000 such as the light source 1100 and the light source substrate 1200 described with reference to FIG. 4 is only an example of the structure of the light source module of the display apparatus according to the present disclosure, and the present disclosure is not limited thereto.

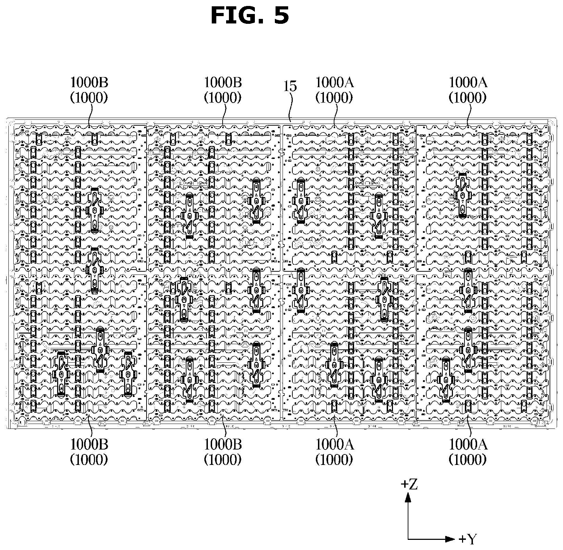

FIG. 5 illustrates a light source substrate and a bottom chassis of the display apparatus according to an embodiment of the present disclosure.

Referring to FIG. 5, the display apparatus 1 according to one embodiment of the present disclosure may include the plurality of light source modules 1000.

The plurality of light source modules 1000 may be disposed in front of the bottom chassis 15 (+X direction). For example, the plurality of light source modules 1000 may each be mounted on the bottom chassis 15. That is, the plurality of light source modules 1000 may each be fixed to the bottom chassis 15 and supported by the bottom chassis 15.

Particularly, the plurality of light source modules 1000 may be fixed to the bottom chassis 15 as each light source substrate 1200 is fixed to the bottom chassis 15. A detailed description of the structure to allow the light source substrate 1200 to be fixed to the bottom chassis 15 will be described later.

For example, the plurality of light source modules 1000 may be formed in shapes that correspond to each other. In other words, each of the plurality of light source modules 1000 may have substantially the same structure.

For example, as shown in FIG. 5, a light source module 1000A located on the right side (+Y direction side) of the display apparatus 1 among the plurality of light source modules 1000 and a light source module 1000B located on the left side (-Y direction side) of the display apparatus 1 among the plurality of light source modules 1000 may arranged to allow the vertical and horizontal directions to be opposite to each other (i.e., rotated by 180 degrees about the X axis). According to this arrangement, the plurality of light source modules 1000 may be arranged to be left and right symmetrical with respect to the horizontal center of the display apparatus 1, and provided to allow both sides of luminance to be uniform with respect to the horizontal center of the display apparatus 1.

As the plurality of light source modules 1000 is designed to have almost the same shape as each other, waste of components may be prevented and efficiency of the manufacturing process may be improved, thereby reducing manufacturing cost.

However, the present disclosure is not limited thereto, and at least some of the plurality of light source modules 1000 may be formed to have different shapes.

FIG. 5 illustrates an example in which the display apparatus 1 includes eight light source modules 1000, but the number of light source modules 1000 included in the display apparatus 1 is not limited to that shown in FIG. 5. For example, the number of light source modules 1000 included in the display apparatus 1 may be more or less than the number shown in FIG. 5. Alternatively, the display apparatus 1 may include a single light source module 1000 that is integrally formed.

Hereinafter the structure of one light source module 1000 among the plurality of light source modules 1000 will be described particularly. In one embodiment, the structure of one light source module 1000 described below may be applied to each of the plurality of light source modules 1000.

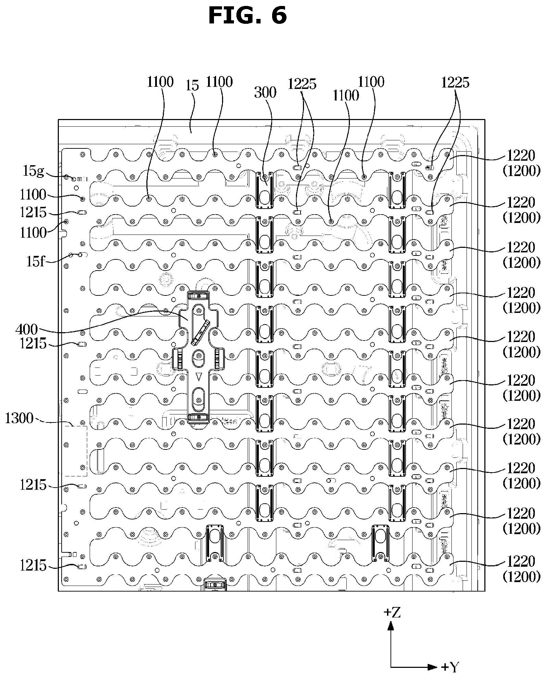

FIG. 6 illustrates an enlarged view of a portion of the light source substrate and the bottom chassis of the display apparatus according to an embodiment of the present disclosure.

Referring to FIG. 6, the light source module 1000 of the display apparatus 1 according to one embodiment of the present disclosure may include a plurality of substrate bars 1220.

The substrate bar 1220 may be a configuration forming at least a portion of the light source substrate 1200 described above and may be a configuration including a printed circuit board extending in one direction.

At least some of the plurality of light sources 1100 may be mounted on the plurality of substrate bars 1220, respectively. At least some of the plurality of light sources 1100 may be mounted on a front surface of the plurality of substrate bars 1220. The front surface of the plurality of substrate bars 1220 refers to one surface of the plurality of substrate bars 1220 in a direction in which the plurality of substrate bars 1220 faces the display panel 20.

The plurality of substrate bars 1220 may be composed of a printed circuit board on which the light source 1100 is mounted and the above-described power supply line 1230, etc. are provided.

The plurality of substrate bars 1220 may be arranged to be spaced apart from each other. The plurality of substrate bars 1220 may be arranged to be spaced apart from each other along the first direction Z. For example, the first direction Z in which the plurality of substrate bars 1220 is spaced apart from each other may be parallel to the vertical direction (i.e., up and down direction) of the display apparatus 1. The plurality of substrate bars 1220 may be arranged parallel to each other at positions spaced apart from each other.

Each of the plurality of substrate bars 1220 may be formed to have a substantially bar shape. Particularly, each of the plurality of substrate bars 1220 may have a width in the first direction Z and may be elongated in a second direction Y different from the first direction Z. That is, each of the plurality of substrate bars 1220 may have a shape in which a length in the second direction Y is greater than the width in the first direction Z.

For example, a width direction of each of the plurality of substrate bars 1220 may be substantially parallel to the vertical direction (i.e., up and down direction) of the display apparatus 1. For example, a direction in which each of the plurality of substrate bars 1220 extends may be substantially parallel to the horizontal direction (i.e., left and right direction) of the display apparatus 1.

For example, the direction in which each of the plurality of substrate bars 1220 extends may be parallel to the long side direction of the display apparatus 1. For example, the width direction of each of the plurality of substrate bars 1220 may be parallel to the short side direction of the display apparatus 1.

The direction in which the plurality of substrate bars 1220 is spaced apart from each other may be parallel to each width direction. In other words, the plurality of substrate bars 1220 may be arranged to be spaced apart from each other along the first direction Z, which is each width direction.

Each of the plurality of substrate bars 1220 may extend in a direction different from the direction in which the plurality of substrate bars 1220 is spaced apart from each other. Particularly, each of the plurality of substrate bars 1220 may extend in a direction (Y direction) perpendicular to the direction in which the plurality of substrate bars 1220 is spaced apart from each other (Z direction). That is, the above-described first and second directions may be perpendicular to each other.

Alternatively, the direction in which the plurality of substrate bars 1220 is arranged to be spaced apart from each other and the direction in which each of the plurality of substrate bars 1220 extends may have a predetermined angle, but the angle may not be exactly vertical.

For example, the plurality of substrate bars 1220 may be arranged to allow a distance between the plurality of substrate bars 1220 in the first direction Z to be uniform. In other words, the distance in the first direction Z between a pair of adjacent substrate bars 1220 among the plurality of substrate bars 1220 may be approximately the same. Accordingly, the uniformity of luminance of the display apparatus 1 may be improved.

For example, the plurality of substrate bars 1220 may be formed to have shapes that correspond to each other. For example, the widths of the plurality of substrate bars 1220 in the first direction (Z direction) may correspond to each other. For example, the lengths of the plurality of substrate bars 1220 extending in the second direction (Y direction) may correspond to each other. For example, the plurality of substrate bars 1220 may be formed in sizes corresponding to each other.

The reflective sheet 120 may be attached to the front surface of each of the plurality of substrate bars 1220.

Each of the plurality of substrate bars 1220 may be mounted on the bottom chassis 15. As each of the plurality of substrate bars 1220 is mounted on the bottom chassis 15 and maintains a fixed position, the plurality of light sources 1100 mounted on the plurality of substrate bars 1220 may be stably disposed at each designed position.

A structure configured to allow each of the plurality of substrate bars 1220 to be fixed to the bottom chassis 15 will be described later.

The light source module 1000 of the display apparatus 1 may include a substrate body 1210. The substrate body 1210 may be a configuration forming at least a portion of the light source substrate 1200 described above and may be a configuration including a printed circuit board.

The plurality of substrate bars 1220 may be connected to the substrate body 1210. The plurality of substrate bars 1220 may be supported by the substrate body 1210. For example, the plurality of substrate bars 1220 may be connected to one side of the substrate body 1210.

The plurality of substrate bars 1220 may extend from the substrate body 1210. For example, each of the plurality of substrate bars 1220 may extend from the substrate body 1210 to the second direction Y. For example, each of the plurality of substrate bars 1220 may extend from one side of the substrate body 1210 in the second direction Y.

For example, the substrate body 1210 may extend along the first direction Z. For example, the substrate body 1210 may have a shape in which a length in the first direction Z is greater than a width in the second direction Y. In this case, as the substrate body 1210 extends along the direction in which the plurality of substrate bars 1220 is arranged, the substrate body 1210 may have a structure in which a greater number of substrate bars 1220 are connected. Further, in this case, as the plurality of substrate bars 1220 extends from one side, which is in the second direction Y corresponding to the width direction (i.e., the relatively short direction), of the substrate body 1210, the plurality of substrate bars 1220 may have a shape that extends longer.

For example, some of the plurality of light sources 1100 may be mounted on the substrate body 1210. Some of the plurality of light sources 1100 may be mounted on the front surface of the substrate body 1210. The front surface of the substrate body 1210 refers to one surface of the substrate body 1210 in the direction in which the substrate body 1210 faces the display panel 20.

The substrate body 1210 may be composed of a printed circuit board on which the light source 1100 is mounted and the power supply line 1230 described above is provided.

The reflective sheet 120 may be attached to the front surface of the substrate body 1210. For example, an integrated reflective sheet 120 may be attached to the front surface of the substrate body 1210 and the plurality of substrate bars 1220. In this case, the uniformity of luminance due to the light reflected by the reflective sheet 120 may be improved, and a process of attaching the reflective sheet 120 to the front surface of the substrate body 1210 and the plurality of substrate bars 1220 may be simplified. However, the present disclosure is not limited thereto, and the plurality of reflective sheets 120, which is distinct from each other, may be attached to the front surfaces of the substrate body 1210 and the plurality of substrate bars 1220.

The substrate body 1210 may be mounted on the bottom chassis 15. Because the substrate body 1210 is mounted on the bottom chassis 15 and maintains a fixed position, the plurality of light sources 1100 mounted on the substrate body 1210 may be stably disposed at each designed position. In addition, because the substrate body 1210 is mounted on the bottom chassis 15, the plurality of substrate bars 1220 connected to the substrate body 1210 may be more stably supported by the substrate body 1210.

A structure configured to allow the substrate body 1210 to be fixed to the bottom chassis 15 will be described later.

The display apparatus 1 may include a connector 1300. The connector 1300 may be electrically connected to the plurality of light sources 1100. The connector 1300 may be electrically connected to the light source substrate 1200. The connector 1300 may be electrically connected to various electronic components mounted on the light source substrate 1200, such as the plurality of light sources 1100, along the power supply line 1230 provided on the light source substrate 1200. Accordingly, the connector 1300 may transmit the electrical signal transmitted from the control assembly 50 to various electronic components mounted on the light source substrate 1200, such as the plurality of light sources 1100. The connector 1300 may transmit power supplied from the power assembly 60 to various electronic components mounted on the light source substrate 1200, such as the plurality of light sources 1100. In other words, the light source module 1000 may be electrically connected to the control assembly 50 and/or the power assembly 60 through the connector 1300.

For example, the connector 1300 may be mounted on the substrate body 1210. Particularly, the connector 1300 may be mounted on a rear surface of the substrate body 1210 facing the bottom chassis 15.

As described above, the reflective sheet 120 may be attached to the front surface of the substrate body 1210, and thus when the connector 1300 is mounted on the front surface of the substrate body 1210, a portion of the reflective sheet 120, which is in a position corresponding to the mounting position of the connector 1300, may interfere with the connector 1300, and the uniformity of luminance of the display apparatus 1 may deteriorate. Alternatively, in one embodiment of the present disclosure, as the connector 1300 is mounted on the rear surface of the substrate body 1210, it is possible to prevent the reduction of the uniformity of luminance of the display apparatus 1.

For example, the substrate body 1210 and the plurality of substrate bars 1220 may be formed integrally with each other. In other words, the substrate body 1210 and the plurality of substrate bars 1220 may be connected to each other to form an integrated light source substrate 1200. The light source substrate 1200 may be composed of a printed circuit board including the substrate body 1210 and the plurality of substrate bars 1220. Alternatively, the substrate body 1210 and the plurality of substrate bars 1220 may be separate components that are not integrally formed with each other and connected through an assembly process.

The structure of the light source module 1000, such as the substrate body 1210 and the substrate bar 1220, described above with reference to FIG. 6 is only an example, and the present disclosure is not limited thereto.

FIG. 6 illustrates one embodiment in which each of the plurality of substrate bars 1220 extends from the substrate body 1210 to the right direction (+Y direction), but is not limited thereto. For example, the plurality of substrate bars 1220 may extend from the substrate body 1210 to the left direction (-Y direction).

In addition, FIG. 6 illustrates one embodiment in which the substrate body 1210 extends in the vertical direction (Z direction) of the display apparatus 1, but is not limited thereto. For example, the substrate body 1210 may extend in the horizontal direction (Y direction).

In addition, FIG. 6 illustrates one embodiment in which each of the plurality of substrate bars 1220 extends in the horizontal direction (Y direction) from one side, which is in the horizontal direction (Y direction), of the substrate body 1210, but is not limited thereto, and each of the plurality of substrate bars 1220 may extend in the vertical direction (Z direction) from one side, which is in the vertical direction (Z direction), of the substrate body 1210. In this case, the plurality of substrate bars 1220 may be arranged to be spaced apart from each other in the horizontal direction (Y direction).

In addition, unlike the above-mentioned description, a first direction that is the width direction of each of the plurality of substrate bars 1220, or a first direction in which the plurality of substrate bars 1220 is spaced apart from each other, or a first direction in which the substrate body 1210 extends or a second direction in which each of the plurality of substrate bars 1220 extends may not be parallel to either the vertical direction (Z direction) or the horizontal direction (Y direction) of the display apparatus 1.

However, hereinafter for convenience of description, the present disclosure will be described based on one embodiment in which the first direction is parallel to the vertical direction (Z direction) of the display apparatus 1, and the second direction is parallel to the horizontal direction (Y direction) of the display apparatus 1.

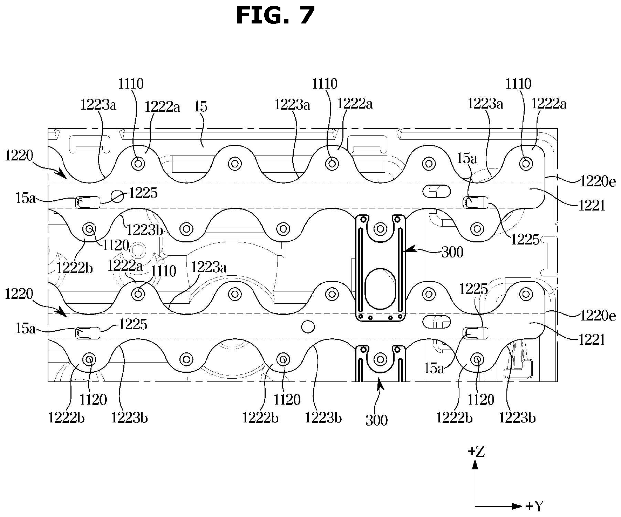

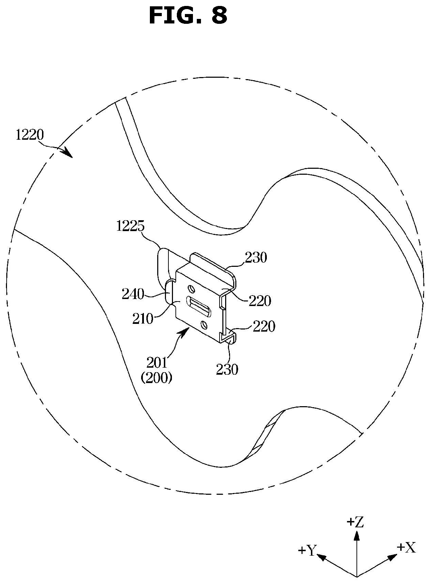

Referring to FIGS. 7 to 16, in the display apparatus 1 according to one embodiment of the present disclosure, the light source substrate 1200 may be mounted on the bottom chassis 15. Particularly, the display apparatus 1 may include a substrate fixer 200 (refer to FIG. 8, etc.), and the substrate fixer 200 may fix the light source substrate 1200 to the bottom chassis 15. That is, the light source substrate 1200 may be mounted on the bottom chassis 15 through the substrate fixer 200.

The substrate fixer 200 may be composed of various types of members including a structure that fixes the light source substrate 1200 to the bottom chassis 15. Particularly, the substrate fixer 200 may be composed of various types of members including a structure that are coupled to the light source substrate 1200 and mountable on the bottom chassis 15.

Hereinafter, in the display apparatus 1 according to one embodiment of the present disclosure, a structure in which the light source substrate 1200 is mounted and fixed to the bottom chassis 15 by the substrate fixer 200 will be described in details with reference to FIGS. 7 to 16.

FIG. 7 illustrates an enlarged view of a portion of a substrate bar and the bottom chassis of the display apparatus according to an embodiment of the present disclosure.

Referring to FIG. 7, the plurality of substrate bars 1220 included in the display apparatus 1 according to one embodiment of the present disclosure may be mounted on the bottom chassis 15. The plurality of substrate bars 1220 may be disposed in front of the bottom chassis 15. Each of the plurality of substrate bars 1220 may be fixed to the bottom chassis 15.

The display apparatus 1 may include a bar fixer 201 (refer to FIG. 8, etc.). The bar fixer 201 may be provided to fix the substrate bar 1220 to the bottom chassis 15. A plurality of bar fixers 201 may be provided, and the plurality of bar fixers 201 may be provided to fix the plurality of substrate bars 1220 to the bottom chassis 15. The bar fixer 201 may be a type of the substrate fixer 200 described above. That is, the plurality of substrate fixers 200 may include the bar fixer 201. At least some of the plurality of substrate fixers 200 (i.e., the bar fixer 201) may be provided to fix the substrate bar 1220 to the bottom chassis 15.

The bar fixer 201 may be provided to be mounted on the bottom chassis 15. The bottom chassis 15 may include a mounting portion 15a on which the bar fixer 201 is mounted. The bar fixer 201 may be fixed to the bottom chassis 15 by being mounted on the mounting portion 15a. As the bar fixer 201 is mounted on the bottom chassis 15, the substrate bar 1220 may be fixed to the bottom chassis 15. The bottom chassis 15 may include a plurality of mounting portions 15a, and the plurality of mounting portions 15a may be provided in the number corresponding to the number of the plurality of bar fixers 201.

At least one bar fixer 201 may be disposed on each of the plurality of substrate bars 1220. Accordingly, the plurality of substrate bars 1220 may be respectively mounted on the bottom chassis 15 and fixed to the bottom chassis 15, respectively.

Each of the plurality of substrate bars 1220 may include a coupling portion 1225. Each of the plurality of substrate bars 1220 may be coupled to the bottom chassis 15 through the coupling portion 1225. The bar fixer 201 may be disposed at the coupling portion 1225 of each of the plurality of substrate bars 1220. Particularly, the bar fixer 201 may be coupled to the coupling portion 1225 of each of the plurality of substrate bars 1220. That is, the number of coupling portions 1225 may correspond to the number of bar fixers 201. The coupling portion 1225 of the substrate bar 1220 may also be referred to as 'bar coupling portion 1225'.

The bar fixer 201 may be disposed on the coupling portion 1225 of the substrate bar 1220 to couple the coupling portion 1225 to the bottom chassis 15. As the bar fixer 201 is mounted on the mounting portion 15a of the bottom chassis 15, the substrate bar 1220 may be fixed to the bottom chassis 15.

In other words, each of the plurality of bar fixers 201 may be disposed on the coupling portion 1225 formed on the corresponding substrate bar 1220 among the plurality of substrate bars 1220. Each of the plurality of bar fixers 201 may couple the coupling portion 1225, which is formed on each corresponding substrate bar 1220 among the plurality of substrate bars 1220, to the bottom chassis 15.

For example, each of the plurality of bar fixers 201 may be detachably mounted on the bottom chassis 15. Accordingly, each of the plurality of substrate bars 1220 may be detachably mounted on the bottom chassis 15.

With this configuration, the plurality of substrate bars 1220 may be efficiently fixed to the bottom chassis 15. As the plurality of substrate bars 1220 is stably fixed to the bottom chassis 15, the durability of the product may be improved and the performance of the product may be improved.

A structure included in the bar fixer 201 will be described later.

Referring to FIG. 7, the substrate bar 1220 may include a central extending portion 1221 extending in one direction. The central extending portion 1221 may be a portion of the substrate bar 1220 and may form a portion of the light source substrate 1200. Each of the plurality of substrate bars 1220 may include the central extending portion 1221.

The central extending portion 1221 may extend in the second direction (Y direction). A width direction of the central extending portion 1221 may be parallel to the first direction (Z direction). The central extending portion 1221 may have a shape in which an extension length in the second direction (Y direction) is greater than a width in the first direction (Z direction).

The central extending portion 1221 may be provided in a central portion of the substrate bar 1220. The central extending portion 1221 may include a region that passes through the center of the substrate bar 1220 and extends in the second direction (Y direction).

In other words, the central extending portion 1221 may extend to pass through the center of each substrate bar 1220 in the second direction Y.

For example, as shown in FIG. 7, the central extending portion 1221 may be defined as a substantially rectangular bar-shaped region.

Referring to FIG. 7, the substrate bar 1220 may include a first protruding portion 1222a. The first protruding portion 1222a may be a portion of the substrate bar 1220 and may form a portion of the light source substrate 1200.

The first protruding portion 1222a may protrude from one side of the central extending portion 1221. The first protruding portion 1222a may protrude from one side, which is in the first direction (Z direction), of the central extending portion 1221. The first protruding portion 1222a may extend from the central extending portion 1221 to the first direction (Z direction). For example, the first protruding portion 1222a may extend upward from an upper side of the central extending portion 1221.

For example, the first protruding portion 1222a may be connected to the central extending portion 1221 and formed integrally with each other.

For example, in one substrate bar 1220, a plurality of first protruding portions 1222a may be provided. That is, the substrate bar 1220 may include the plurality of first protruding portions 1222a.

The plurality of first protruding portions 1222a may be arranged along the second direction (Y direction). For example, the plurality of first protruding portions 1222a may be arranged in such a way that positions thereof in the first direction Z (i.e., the vertical height of the display apparatus 1) corresponds to each other. For example, the plurality of first protruding portions 1222a may be arranged at regular intervals along the second direction (Y direction).

For example, the plurality of first protruding portions 1222a may be formed to have shapes that correspond to each other. For example, a length of each of the plurality of first protruding portions 1222a protruding from the central extending portion 1221 to the first direction (Z direction) may correspond to each other.

Some of the plurality of light sources 1100 mounted on the substrate bar 1220 may be mounted on the plurality of first protruding portions 1222a. Hereinafter the light source mounted on each of the plurality of first protruding portions 1222a will be referred to as 'first side light source 1110'. For example, a single first side light source 1110 may be mounted on a single first protruding portion 1222a, but the present disclosure is not limited thereto.

The plurality of first side light sources 1110 may be disposed at positions spaced apart in the first direction (Z direction) from the central extending portion 1221. As shown in FIG. 7, the plurality of first side light sources 1110 may be arranged to be biased upward from the central extending portion 1221.

The plurality of first side light sources 1110 may be arranged along the second direction (Y direction). For example, the plurality of first side light sources 1110 may be arranged in such a way that positions thereof in the first direction Z correspond to each other. For example, the plurality of first side light sources 1110 may be arranged at regular intervals along the second direction (Y direction).

Referring to FIG. 7, the substrate bar 1220 may include a second protruding portion 1222b. The second protruding portion 1222b may be a portion of the substrate bar 1220 and may form a portion of the light source substrate 1200.

The second protruding portion 1222b may protrude from the other side of the central extending portion 1221. The second protruding portion 1222b may protrude from the other side, which in the first direction (Z direction), of the central extending portion 1221. The other side of the central extending portion 1221 means the other side different from the one side of the central extending portion 1221 on which the first protruding portion 1222a protrudes. For example, the second protruding portion 1222b may protrude from the other side of the central extending portion 1221, which is opposite to the one side of the central extending portion 1221 on which the first protruding portion 1222a protrudes, to a direction opposite to a protruding direction of the first protruding portion 1222a.

The second protruding portion 1222b may extend from the central extending portion 1221 to the first direction (Z direction). For example, the second protruding portion 1222b may extend downward from the lower side of the central extending portion 1221.

For example, the second protruding portion 1222b may be connected to the central extending portion 1221 and formed integrally with each other.

For example, a plurality of second protruding portions 1222b may be provided in a single substrate bar 1220. That is, the substrate bar 1220 may include the plurality of second protruding portions 1222b.

The plurality of second protruding portions 1222b may be arranged along the second direction (Y direction). For example, the plurality of second protruding portions 1222b may be arranged in such a way that positions thereof in the first direction Z (i.e., the vertical height of the display apparatus 1) correspond to each other. For example, the plurality of second protruding portions 1222b may be arranged at regular intervals along the second direction (Y direction).

For example, the plurality of second protruding portions 1222b may be formed to have shapes that correspond to each other. For example, a length of each of the plurality of second protruding portions 1222b protruding from the central extending portion 1221 to the first direction (Z direction) may correspond to each other.

For example, the length, at which each of the plurality of first protruding portions 1222a protrudes from the central extending portion 1221, and the length, at which each of the plurality of second protruding portions 1222b protrudes from the central extending portion 1221, may be approximately equal to each other. Further, for example, the shape of each of the plurality of first protruding portions 1222a and the shape of each of the plurality of second protruding portions 1222b may correspond to each other.

Some of the plurality of light sources 1100 mounted on the substrate bar 1220 may be mounted on the plurality of second protruding portions 1222b. Hereinafter the light source mounted on each of the plurality of second protruding portions 1222b will be referred to as 'second side light source 1120'. For example, a single second side light source 1120 may be mounted on a single second protruding portion 1222b, but is not limited thereto.

The plurality of second side light sources 1120 may be disposed at positions spaced apart from the central extending portion 1221 to the first direction (Z direction). As shown in FIG. 7, the plurality of second side light sources 1120 may be arranged to be biased downward from the central extending portion 1221.

The plurality of second side light sources 1120 may be arranged along the second direction (Y direction). For example, the plurality of second side light sources may be arranged in such a way that positions thereof in the first direction Z correspond to each other. For example, the plurality of second side light sources 1120 may be arranged at regular intervals along the second direction (Y direction).

Some regions of the central extending portion 1221, in which the plurality of first protruding portions 1222a protrudes, and other regions of the central extending portion 1221, in which the plurality of second protruding portions 1222b extends, may be arranged to be staggered with respect to the second direction (Y direction). In other words, the first protruding portion 1222a and the second protruding portion 1222b may be arranged to be staggered with each other. In a single substrate bar 1220, the plurality of first protruding portions 1222a and the plurality of second protruding portions 1222b may be arranged not to be parallel to each other in the first direction Z.

With this configuration, the first side light source 1110 and the second side light source 1120 may be arranged to be staggered with respect to the second direction (Y direction). In a single substrate bar 1220, the plurality of light sources 1100 may be arranged in such a way that the first side light source 1110 disposed on one side in the first direction Z and the second side light source 1120 disposed on the other side are arranged to be staggered with respect to the second direction (Y direction). Accordingly, the uniformity of luminance by the plurality of light sources 1100 may be improved. That is, in a single substrate bar 1220, the plurality of light sources 1100 may be arranged in a zigzag pattern.

The substrate bar 1220 may include a plurality of first recess portions 1223a. Each of the plurality of first recess portions 1223a may be formed between a pair of adjacent first protruding portions 1222a among the plurality of first protruding portions 1222a. That is, the first recess portion 1223a may be defined as a partial region of the substrate bar 1220 formed between the pair of adjacent first protruding portions 1222a.

The plurality of first recess portions 1223a may be provided on one side of the central extending portion 1221 with respect to the first direction Z. For example, the plurality of first recess portions 1223a may be provided on the upper side of the central extending portion 1221.

The plurality of first recess portions 1223a may be formed to have a shape that is relatively concavely recessed toward the inside of the central extending portion 1221 in comparison with the plurality of first protruding portions 1222a.

The plurality of first recess portions 1223a may be arranged along the second direction (Y direction). For example, the plurality of first recess portions 1223a may be arranged in such a way that positions thereof in the first direction Z (i.e., the vertical height of the display apparatus 1) correspond to each other. For example, the plurality of first recess portions 1223a may be arranged at regular intervals along the second direction (Y direction).

For example, the plurality of first recess portions 1223a may be formed to have shapes that correspond to each other.

The substrate bar 1220 may include a plurality of second recess portions 1223b. Each of the plurality of second recess portions 1223b may be formed between a pair of adjacent second protruding portions 1222b among the plurality of second protruding portions 1222b. That is, the second recess portion 1223b may be defined as a partial region of the substrate bar 1220 formed between the pair of adjacent second protruding portions 1222b.

The plurality of second recess portions 1223b may be provided on the other side of the central extending portion 1221 with respect to the first direction Z. The other side of the central extending portion 1221 means the other side different from the one side of the central extending portion 1221 in which the first recess portion 1223a is provided. For example, the plurality of second recess portions 1223b may be provided on the lower side of the central extending portion 1221.

The plurality of second recess portions 1223b may be formed to have a shape that is relatively concavely recessed toward the inside of the central extending portion 1221 in comparison with the plurality of second protruding portions 1222b.

The plurality of second recess portions 1223b may be arranged along the second direction (Y direction). For example, the plurality of second recess portions 1223b may be arranged in such a way that positions thereof in the first direction Z (i.e., the vertical height of the display apparatus 1) correspond to each other. For example, the plurality of second recess portions 1223b may be arranged at regular intervals along the second direction (Y direction).

For example, the plurality of second recess portions 1223b may be formed to have shapes that correspond to each other.

Some regions of the central extending portion 1221, in which the plurality of first recess portions 1223a is provided, and other regions of the central extending portion 1221, in which the plurality of second recess portions 1223b is provided, may be arranged to be staggered with respect to the second direction (Y direction). In other words, the first recess portion 1223a and the second recess portions 1223b may be arranged to be staggered. In a single substrate bar 1220, the plurality of first recess portions 1223a and the plurality of second recess portions 1223b may be arranged not to be parallel to each other in the first direction Z.

For example, each of the plurality of first protruding portions 1222a may be arranged parallel to the first direction Z with the nearest second recess portion 1223b among the plurality of second recess portions 1223b. That is, the plurality of first protruding portions 1222a and the plurality of second recess portions 1223b may be arranged parallel to each other in the first direction Z.

Further, each of the plurality of second protruding portions 1222b may be arranged parallel to the first direction Z with the nearest first recess portion 1223a among the plurality of first recess portions 1223a. That is, the plurality of second protruding portions 1222b and the plurality of first recess portions 1223a may be arranged parallel to each other in the first direction Z.

Accordingly, the substrate bar 1220 may have an overall shape that extends in a zigzag pattern.

For example, the shape of each of the plurality of first recess portions 1223a and the shape of each of the plurality of second recess portions 1223b may correspond to each other.

In each of the plurality of substrate bars 1220, the coupling portion 1225 may be located on the above-described central extending portion 1221. The coupling portion 1225 may be located at the center of the substrate bar 1220 with respect to the width direction (i.e., the first direction Z). At this time, that the coupling portion 1225 is located at the center of the substrate bar 1220 with respect to the width direction does not necessarily mean that the center of the coupling portion 1225 exactly coincides with the center of the substrate bar 1220 with respect to the first direction Z or that a straight line passing through the center of the substrate bar 1220 in the second direction Y passes through the center of the coupling portion 1225. Particularly, it is sufficient that the coupling portion 1225 is located in a position adjacent to the center of the substrate bar 1220 with respect to the first direction Z on the central extending portion 1221. That is, the coupling portion 1225 may be formed at a specific position on a straight line passing through the center, which is in the first direction Z, of the substrate bar 1220 in the second direction Y. Alternatively, the coupling portion 1225 may be formed in a region, which is adjacent within a predetermined distance from a straight line passing through the center, which is in the first direction Z, of the substrate bar 1220 in the second direction Y, on the substrate bar 1220.

In other words, each of the plurality of bar fixers 201 may be disposed on the central extending portion 1221 of the corresponding substrate bar 1220. Each of the plurality of bar fixers 201 may be located at the center of the corresponding substrate bar 1220 with respect to the width direction (i.e., the first direction Z).

In each of the plurality of substrate bars 1220, the coupling portion 1225 may be located on one side, which is in the first direction Z, of one light source 1100 among the plurality of light sources 1100 mounted on the corresponding substrate bar 1220. The coupling portion 1225 may be disposed in a position parallel to one of the light sources 1100, which is among the plurality of light sources 1100 mounted on the corresponding substrate bar 1220, with respect to the width direction (i.e., the first direction Z). At this time, that the coupling portion 1225 is located on one side of one light source 1100 with respect to the first direction Z does not necessarily mean that the center of the coupling portion 1225 and the center of the light source 1100 are located simultaneously on a straight line extending in the first direction Z. Particularly, it is sufficient that the coupling portion 1225 is located adjacent to a straight line passing through one light source 1100 in the first direction Z. That is, the coupling portion 1225 may be formed at a specific position, which is on a straight line passing through one light source 1100 in the first direction Z, on the substrate bar 1220. Alternatively, the coupling portion 1225 may be disposed on a region, which is adjacent to the substrate bar 1220 within a predetermined distance from a straight line passing through one light source 1100 in the first direction Z, on the substrate bar 1220. One light source 1100 may be one of the plurality of first side light sources 1110 or one of the plurality of second side light sources 1120.

The coupling portion 1225 may be arranged parallel to one of the first plurality of first protruding portions 1222a or the plurality of second protruding portions 1222b with respect to the first direction Z. In other words, the coupling portion 1225 and one first protruding portion 1222a among the plurality of first protruding portions 1222a may be arranged parallel to the first direction Z or the coupling portion 1225 and one second protruding portion 1222b among the plurality of second protruding portions 1222b may be arranged parallel to the first direction Z.

In other words, each of the plurality of bar fixers 201 may be located on one side, which is in the first direction Z, of one light source 1100 among the plurality of light sources 1100 mounted on the corresponding substrate bar 1220. Each of the plurality of bar fixers 201 may be arranged parallel to one light source 1100, which is among the plurality of light sources 1100 mounted on the corresponding substrate bar 1220, in the first direction Z. Each of the plurality of bar fixers 201 may be arranged at a position parallel to one of the plurality of first protruding portions 1222a or the plurality of second protruding portions 1222b on the corresponding substrate bar 1220, with respect to the first direction Z.

Accordingly, the coupling portion 1225 in each of the plurality of substrate bars 1220 may be located on the central extending portion 1221 of each substrate bar 1220 and located on one side, which is in the first direction Z, of one light source (e.g., either the first side light source 1110 or the second side light source 1120) among the plurality of light sources 1100 mounted on the substrate bar 1220. In other words, the coupling portion 1225 in each of the plurality of substrate bars 1220 may be disposed at the center with respect to the width direction of each substrate bar 1220, and may be disposed in a position parallel to one light source 1100, which is among the plurality of light sources 1100 mounted on the substrate bar 1220, with respect to the width direction. In other words, the coupling portion 1225 in each of the plurality of substrate bars 1220 may be arranged parallel to one of the plurality of first protruding portions 1222a or the plurality of second protruding portions 1222b on the corresponding central extending portion 1221, in the first direction Z.

In addition, each of the plurality of bar fixers 201 may be disposed on the coupling portion 1225 formed at the above-mentioned position, so as to allow the coupling portion 1225 to be coupled to the mounting portion 15a of the bottom chassis 15.

For example, at least some of the plurality of bar fixers 201 may be disposed adjacent to an end of at least one substrate bar 1220 among the plurality of substrate bars 1220. In other words, at least some of the plurality of coupling portions 1225 provided on the plurality of substrate bars 1220 may be disposed adjacent to the end of the substrate bar 1220. The end of the substrate bar 1220 may refer to one end of the substrate bar 1220 with respect to a direction, in which the substrate bar 1220 extends from the substrate body 1210 in the second direction Y, and may refer to one end opposite to the substrate body 1210 of the substrate bar 1220. As the substrate bar 1220 is elongated from the substrate body 1210, there is a risk that the end opposite to the substrate body 1210 may not be effectively supported by the substrate body 1210. However, the bar fixer 201 may be located adjacent thereto and couple the coupling portion 1225 to the bottom chassis 15. Accordingly, the end of the substrate bar 1220 may efficiently maintain the fixed position.

For example, the coupling portion 1225 formed on each of the plurality of substrate bars 1220 may be arranged parallel to each other. For example, as shown in FIG. 7, the coupling portion 1225 formed on each of the plurality of substrate bars 1220 may be arranged parallel to the first direction Z. Accordingly, the coupling portion 1225 formed on each of the plurality of substrate bars 1220 may be disposed on the central extending portion 1221 of each substrate bar 1220 and at the same time, disposed on a straight line connecting the light sources 1100, which are parallel to the first direction Z among the plurality of light sources 1100 mounted on the plurality of substrate bars 1220.

Accordingly, the plurality of bar fixers 201 may be arranged parallel to each other. As shown in FIG. 7, the plurality of bar fixers 201 may be arranged parallel to the first direction Z.

For example, as shown in FIG. 7, one substrate bar 1220 of the plurality of substrate bars 1220 may be fixed to the bottom chassis 15 by the plurality of bar fixers 201, and the plurality of coupling portions 1225 may be formed on one substrate bar 1220.

At this time, in one substrate bar 1220, the plurality of coupling portions 1225 may be arranged parallel to the second direction Y. Therefore, the plurality of bar fixers 201 disposed on one substrate bar 1220 may be arranged parallel to each other in the second direction Y.

For example, among the plurality of coupling portions 1225 formed on a single substrate bar 1220, some coupling portions 1225 may be formed adjacent to an end portion 1220e of the substrate bar 1220, and others of the coupling portions 1225 may be formed at a position between the coupling portion 1225, which is formed adjacent to the end portion 1220e of the substrate bar 1220, and the substrate body 1210. Further, the plurality of coupling portions 1225 formed at positions adjacent to the end portion 1220e of each of the plurality of substrate bars 1220 may be arranged parallel to the first direction Z. In addition, the plurality of coupling portions 1225 formed at the position between the substrate body 1210 and the coupling portion 1225 formed at the position adjacent to the end portion 1220e of each of the plurality of substrate bars 1220 may be arranged parallel to the first direction Z.

Alternatively, a single coupling portion 1225 may be formed on a single substrate bar 1220, and the single substrate bar 1220 may be fixed to the bottom chassis 15 by a single bar fixer 201.

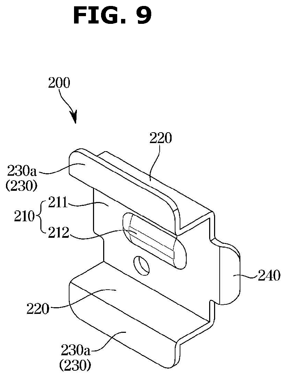

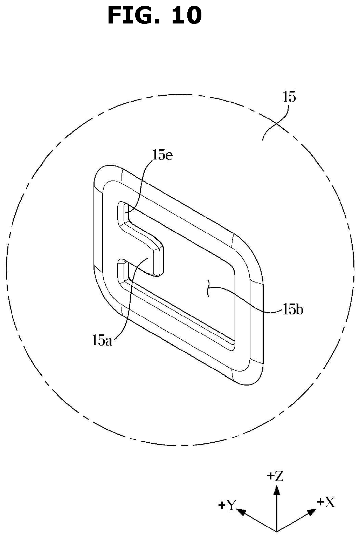

FIG. 8 illustrates the substrate bar of the display apparatus according to an embodiment of the present disclosure and a bar fixer coupled thereto. FIG. 9 illustrates the bar fixer of the display apparatus according to an embodiment of the present disclosure. FIG. 10 illustrates a mounting portion provided on the bottom chassis of the display apparatus according to an embodiment of the present disclosure.

Referring to FIGS. 8 to 10, the display apparatus 1 according to one embodiment of the present disclosure may include the bar fixer 201 provided to fix the substrate bar 1220 to the bottom chassis 15. The bar fixer 201 may be provided to mount the substrate bar 1220 to the bottom chassis 15. The bar fixer 201 may be a type of substrate fixer 200 provided to mount the light source substrate 1200 to the bottom chassis 15. In other words, the substrate fixer 200 may include the bar fixer 201.

The bar fixer 201 may be mounted on the substrate bar 1220. The bar fixer 201 may be fixed to the substrate bar 1220. The bar fixer 201 may be coupled to the coupling portion 1225 of the substrate bar 1220.

For example, the bar fixer 201 may include a substrate coupling portion 230 coupled to the substrate bar 1220. The bar fixer 201 may be fixed to the substrate bar 1220 through the substrate coupling portion 230. The bar fixer 201 may be supported on the substrate bar 1220 through the substrate coupling portion 230. The substrate coupling portion 230 may be in contact with the substrate bar 1220.

For example, the bar fixer 201 may be fixed to the substrate bar 1220 by solder that couples the substrate coupling portion 230 to the substrate bar 1220. Alternatively, the bar fixer 201 may be fixed to the substrate bar 1220 by an adhesive that couples the substrate coupling portion 230 to the substrate bar 1220. However, the present disclosure is not limited thereto, and the bar fixer 201 may be coupled to the substrate bar 1220 in various ways. For example, the bar fixer 201 may be coupled to the substrate bar 1220 by a fastening member (not shown) such as a pin or screw that penetrates the substrate coupling portion 230.

For example, the substrate coupling portion 230 may include a contact surface 230a provided to be in contact with one surface of the substrate bar 1220. The contact surface 230a may have a shape corresponding to one surface of the substrate bar 1220. For example, the contact surface 230a may be formed in a planar shape. In this case, the bar fixer 201 may be fixed to the substrate bar 1220 by solder, adhesive, etc. disposed between the contact surface 230a and one surface of the substrate bar 1220.

For example, on one side of the substrate bar 1220 facing the bottom chassis 15, the bar fixer 201 may be provided to mount the substrate bar 1220 to the bottom chassis 15. In other words, at the rear of the substrate bar 1220, the bar fixer 201 may be provided to mount the substrate bar 1220 to the bottom chassis 15.

For example, the bar fixer 201 may be provided on one side of the substrate bar 1220 facing the bottom chassis 15. Particularly, the bar fixer 201 may be coupled to one surface of the substrate bar 1220 facing the bottom chassis 15. The bar fixer 201 may be coupled to the rear surface of the substrate bar 1220. The above-described substrate coupling portion 230 may be coupled to one surface of the substrate bar 1220 facing the bottom chassis 15.

For example, the substrate bar 1220 may be composed of a single-sided PCB on which a circuit pattern is formed only on the front surface, on which the light source 1100 is mounted, among both sides in the front and rear direction X. At this time, by using various coupling methods such as solder and adhesive, the bar fixer 201 may be coupled to the rear surface of the substrate bar 1220 facing the bottom chassis 15.

Alternatively, the substrate bar 1220 may be composed of a double-sided PCB with circuit patterns formed on both sides in the front and rear direction X. At this time, by using various coupling methods such as solder, adhesive, or a separate PCB mounting structure, the bar fixer 201 may be coupled to the rear surface of the substrate bar 1220 facing the bottom chassis 15.

For example, the bar fixer 201 may include a plurality of substrate coupling portions 230. Particularly, as shown in FIGS. 8 and 9, the bar fixer 201 may include a pair of substrate coupling portions 230. The pair of substrate coupling portions 230 may each be coupled to the substrate bar 1220. Particularly, at positions spaced apart from each other, the pair of substrate coupling portions 230 may be coupled to one surface of each of the substrate bar 1220.

For example, the pair of substrate coupling portions 230 may be disposed to face each other with respect to a direction different from a direction, in which the bar fixer 201 is mounted on the mounting portion 15a of the bottom chassis 15 (e.g., a direction in which the bar fixer 201 slides with respect to the mounting portion 15a as the bar fixer 201 is mounted to the mounting portion 15a, as described later). According to one embodiment shown in FIG. 8, the pair of substrate coupling portions 230 may be arranged to face each other with respect to the first direction Z.

For example, the pair of substrate coupling portions 230 may be arranged symmetrically with respect to the center of the bar fixer 201. For example, the pair of substrate coupling portions 230 may be disposed symmetrically with respect to a center line passing through the center of the bar fixer 201 in a direction in parallel to the direction in which the bar fixer 201 is mounted on the mounting portion 15a of the bottom chassis 15. According to one embodiment shown in FIG. 8, the pair of substrate coupling portions 230 may be arranged symmetrically with respect to the center line passing through the center of the bar fixer 201 in the second direction Y.

Accordingly, by including the plurality of substrate coupling portions 230, the bar fixer 201 may be more firmly fixed to the substrate bar 1220 and may be more stably supported by the substrate bar 1220. The number of substrate coupling portions 230 is not limited to the number shown in FIGS. 8 and 9, and various numbers of substrate coupling portions 230 may be provided in a single bar fixer 201.

Alternatively, the bar fixer 201 may be coupled to the substrate bar 1220 through various structures.

The bar fixer 201 may fix the substrate bar 1220 and the bottom chassis 15 by being mounted on the bottom chassis 15. The bar fixer 201 may fix the substrate bar 1220 and the bottom chassis 15 by being coupled to the bottom chassis 15.

Particularly, as described above, the bottom chassis 15 may include the mounting portion 15a on which the bar fixer 201 is mounted. When the bar fixer 201 is mounted on the mounting portion 15a, the bar fixer 201 may be in contact with one surface of the mounting portion 15a.

The bar fixer 201 may include a fixing body 210 provided to be in contact with the bottom chassis 15. For example, the fixing body 210 may be in contact with one surface of the bottom chassis 15 opposite to the substrate bar 1220. In other words, the fixing body 210 may be in contact with the rear surface of the bottom chassis 15. At this time, the front surface of the bottom chassis 15 may be in contact with the substrate bar 1220, and the rear surface of the bottom chassis 15 may be in contact with the fixing body 210. With this structure, the bottom chassis 15 may be in contact with both configurations simultaneously while a portion of the bottom chassis 15 is disposed between the substrate bar 1220 and the fixing body 210. Accordingly, the substrate bar 1220 may be fixed to the bottom chassis 15.

That is, the fixing body 210 may be provided to be in contact with the mounting portion 15a. For example, the fixing body 210 may be provided to be in contact with one surface, which is opposite to the substrate bar 1220, of the mounting portion 15a. The fixing body 210 may be in contact with the rear surface of the bottom chassis 15.

One surface of the fixing body 210 in contact with the mounting portion 15a of the bottom chassis 15 may be arranged to face the substrate bar 1220.

For example, the fixing body 210 may be provided to allow one surface in contact with the mounting portion 15a of the bottom chassis 15 to be parallel to the substrate bar 1220. For example, the fixing body 210 may be provided to allow one surface in contact with the mounting portion 15a of the bottom chassis 15 to be parallel to the mounting portion 15a.

Particularly, the fixing body 210 may include a cover portion 211 provided to cover one surface of the bottom chassis 15 opposite to the substrate bar 1220, and an interference protrusion 212 protruding from the cover portion 211.

The cover portion 211 may be provided to cover the rear surface of the bottom chassis 15. When the bar fixer 201 is mounted on the mounting portion 15a, the cover portion 211 may cover the rear surface of the mounting portion 15a opposite to the front surface facing the substrate bar 1220.

For example, the cover portion 211 may be provided to be parallel to one surface of the mounting portion 15a. For example, the cover portion 211 may be formed to have a substantially flat plate shape.

The interference protrusion 212 may be provided to be in contact with the mounting portion 15a in a state in which the bar fixer 201 is mounted on the mounting portion 15a. The interference protrusion 212 may be provided to interfere with the mounting portion 15a in the state in which the bar fixer 201 is mounted on the mounting portion 15a. In the state in which the bar fixer 201 is mounted on the mounting portion 15a, the interference protrusion 212 may be provided to press the mounting portion 15a to the direction in which the substrate bar 1220 is located.

For example, the interference protrusion 212 may protrude from the cover portion 211 toward the rear surface of the bottom chassis 15. In other words, the interference protrusion 212 may protrude from the cover portion 211 toward the mounting portion 15a. In other words, the interference protrusion 212 may protrude from the cover portion 211 toward the substrate bar 1220. Based on one embodiment shown in FIGS. 8 and 9, the interference protrusion 212 may protrude from the cover portion 211 toward the front (+X direction).

By the interference protrusion 212, the bar fixer 201 may be more firmly mounted on the mounting portion 15a of the bottom chassis 15. Accordingly, the bar fixer 201 and the substrate bar 1220 may be more stably fixed to the bottom chassis 15.

However, the structure of the fixing body 210 is not limited thereto, and the fixing body 210 may include various structure provided to be in contact with the mounting portion 15a of the bottom chassis 15 to allow the substrate bar 1220 to be fixed to the bottom chassis 15.

In order that the fixing body 210 is in contact with the rear surface of the mounting portion 15a so as to be mounted thereon, the bottom chassis 15 may include a chassis hole 15b. The chassis hole 15b may be formed to be penetrated by the bar fixer 201. The bar fixer 201 may be disposed by passing through the chassis hole 15b. For example, the chassis hole 15b may be formed in the shape of a hole formed as the substrate bar 1220 is penetrated in the front and rear direction X.

For example, the chassis hole 15b may have a substantially quadrangle shape as shown in the drawing, but the shape thereof is not limited thereto.

The substrate bar 1220 disposed on one side of the bottom chassis 15 with respect to the chassis hole 15b may be in contact with one surface of the bottom chassis 15, and the fixing body 210 disposed on the other side of the bottom chassis 15 with respect to the chassis hole 15b may be in contact with the other surface of the bottom chassis 15. With this structure, the bar fixer 201 and the substrate bar 1220 may be mounted on the bottom chassis 15.

Particularly, the mounting portion 15a may be provided in the chassis hole 15b. The mounting portion 15a may be located inside the chassis hole 15b. For example, the mounting portion 15a may extend from one side of an edge 15e of the chassis hole 15b toward the inside of an edge of the chassis hole 15b.

The mounting portion 15a may extend in one direction from one side of the edge 15e of the chassis hole 15b. The one direction, in which the mounting portion 15a extends, may be parallel to the direction in which the bar fixer 201 is mounted on the mounting portion 15a (e.g., a direction in which the bar fixer 201 slides with respect to the mounting portion 15a when the bar fixer 201 is mounted to the mounting portion 15a, as described later). Particularly, the mounting portion 15a may extend from one side of the edge 15e of the chassis hole 15b to a direction opposite to the direction in which the bar fixer 201 is mounted on the mounting portion 15a. According to one embodiment shown in FIG. 10, the mounting portion 15a may extend in the second direction Y from one side of the edge 15e of the chassis hole 15b.

The bar fixer 201 may include an extending portion 220. The extending portion 220 may be connected to the fixing body 210. The extending portion 220 may extend from the fixing body 210.

Particularly, the extending portion 220 may extend from the fixing body 210 toward the substrate bar 1220. For example, the extending portion 220 may connect the fixing body 210 and the substrate coupling portion 230. The extending portion 220 may extend from the fixing body 210 to the substrate coupling portion 230.

For example, the extending portion 220 may extend in a different direction from the fixing body 210. For example, the extending portion 220 may extend in a different direction from the substrate coupling portion 230. According to one embodiment shown in FIGS. 8 and 9, the extending portion 220 may extend approximately along the front and rear direction X, and the extending portion 220 may extend from the fixing body 210 to the front (+X direction).

The extending portion 220 may be provided to penetrate the chassis hole 15b. Particularly, the extending portion 220 may extend from the fixing body 210 to penetrate the chassis hole 15b. The extending portion 220 may extend from the fixing body 210 toward the substrate bar 1220 by passing through the chassis hole 15b.

By the extending portion 220, the fixing body 210 and the substrate bar 1220 may be arranged to be spaced apart from each other. Particularly, the rear surface of the substrate bar 1220 and the fixing body 210 may be arranged to face each other at a spaced apart position by the extending portion 220. Accordingly, a space may be formed between the substrate bar 1220 and the fixing body 210. When the bar fixer 201 is mounted on the mounting portion 15a, the mounting portion 15a may be disposed in the space between the substrate bar 1220 and the fixing body 210.

In other words, when the bar fixer 201 is mounted on the mounting portion 15a, the fixing body 210 and the extending portion 220 may be arranged to surround at least a portion of the mounting portion 15a.

With this structure, the bar fixer 201 may be more stably mounted on the mounting portion 15a. In addition, with this structure, the bar fixer 201 and the substrate bar 1220 may be more stably fixed to the bottom chassis 15.

For example, the bar fixer 201 may include a plurality of extending portions 220. Particularly, as shown in FIGS. 8 and 9, the bar fixer 201 may include a pair of extending portions 220. The pair of extending portions 220 may each be connected to the fixing body 210. The pair of extending portions 220 may be respectively connected to the fixing body 210 at positions spaced apart from each other.

For example, the pair of extending portions 220 may be disposed to face each other in a direction different from the direction in which the bar fixer 201 is mounted on the mounting portion 15a (e.g., a direction in which the bar fixer 201 slides with respect to the mounting portion 15a as the bar fixer 201 is mounted to the mounting portion 15a, as described later). According to one embodiment shown in FIG. 8, the pair of extending portions 220 may be arranged to face each other in the first direction Z. According to one embodiment shown in FIG. 8, the pair of extending portions 220 may each extend from both sides of the fixing body 210, which is in the first direction Z, toward the substrate bar 1220.

For example, each extending portion of the pair of extending portions 220 may extend along the direction in which the bar fixer 201 is mounted on the mounting portion 15a of the bottom chassis 15.

For example, the pair of extending portions 220 may be arranged symmetrically with respect to the center of the bar fixer 201. For example, the pair of extending portions 220 may be arranged symmetrically to each other with respect to a center line passing through the bar fixer 201 in a direction in parallel to the direction in which the bar fixer 201 is mounted on the mounting portion 15a of the bottom chassis 15. According to one embodiment shown in FIG. 8, the pair of extending portions 220 may be arranged symmetrically with respect to the center line passing through the center of the bar fixer 201 in the second direction Y.

Accordingly, the bar fixer 201 may be supported more stably on the substrate bar 1220 by including the plurality of extending portions 220. In addition, the bar fixer 201 may be more stably mounted on the mounting portion 15a by including the plurality of extending portions 220. The number of extending portions 220 is not limited to the number shown in FIGS. 8 and 9, and a various number of extending portions 220 may be provided in a single bar fixer 201.

With the above-mentioned structure, the bar fixer 201 may be stably mounted on the mounting portion 15a of the bottom chassis 15, and the substrate bar 1220 may be stably fixed to the bottom chassis 15 by using the bar fixer 201.

The above-mentioned each configuration of the bar fixer 201 may be provided to be symmetrical with respect to the center of the bar fixer 201. For example, the above-mentioned each configuration of the bar fixer 201 may be provided to be symmetrical with respect to the center line passing through the center of the bar fixer 201 in the first direction Z. Alternatively, the above-mentioned each configuration of the bar fixer 201 may be provided to be symmetrical with respect to the center line passing through the center of the bar fixer 201 in the second direction Y. The bar fixer 201 may be provided to have a structure symmetrical about the center, and thus when a work, in which the bar fixer 201 is fixed to the substrate bar 1220, is performed, a restriction due to the direction of the bar fixer 201 about the substrate bar 1220 may be reduced and a manufacturer performing this work may have little consideration for the direction of the bar fixer 201. Work efficiency for coupling the bar fixer 201 to the substrate bar 1220 may be improved and thus manufacturing time and manufacturing costs may be reduced.

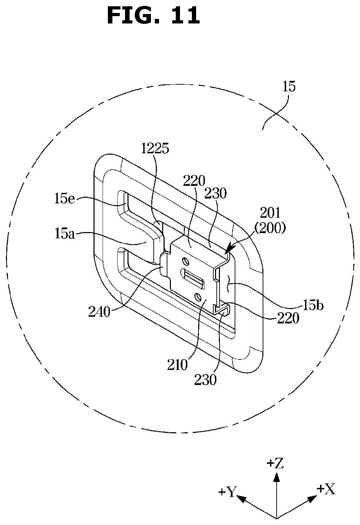

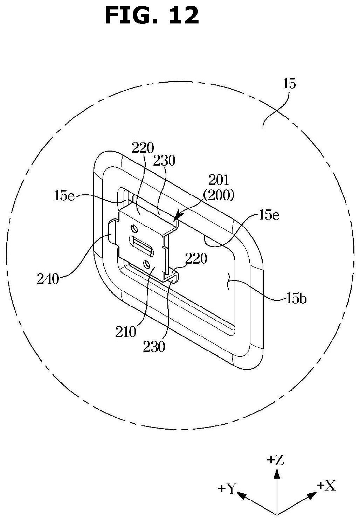

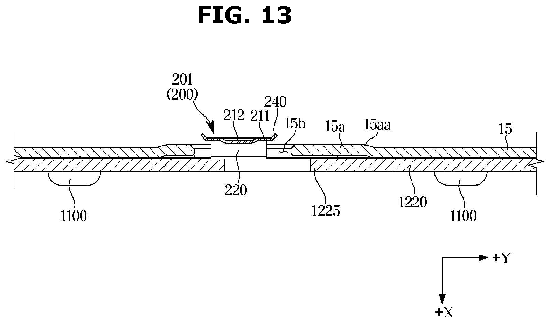

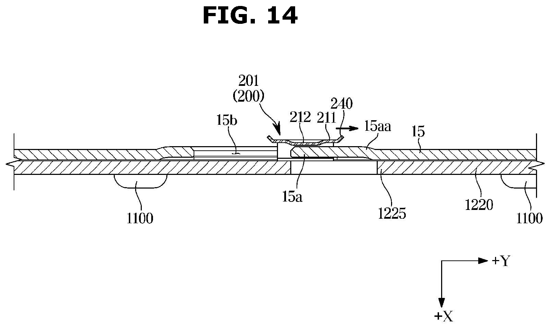

FIG. 11 illustrates a state before the light source substrate of the display apparatus according to an embodiment of the present disclosure is mounted on the bottom chassis. FIG. 12 illustrates a state after the light source substrate of the display apparatus according to an embodiment of the present disclosure is mounted on the bottom chassis. FIG. 13 illustrates a state before the light source substrate of the display apparatus according to an embodiment of the present disclosure is mounted on the bottom chassis. FIG. 14 illustrates a state after the light source substrate of the display apparatus according to an embodiment of the present disclosure is mounted on the bottom chassis.

Referring to FIGS. 11 to 14, in the display apparatus 1 according to one embodiment of the present disclosure, the light source substrate 1200 may be mounted on the bottom chassis 15 by sliding with respect to the bottom chassis 15.

Particularly, the bar fixer 201 coupled to the substrate bar 1220 may be arranged to slide in one direction with respect to the bottom chassis 15 and be mounted on the bottom chassis 15. The bar fixer 201 may be provided to be mounted on the mounting portion 15a by sliding in one direction with respect to the mounting portion 15a.

Referring to FIGS. 11 and 13, at a position before the bar fixer 201 is mounted on the mounting portion 15a, the bar fixer 201 may be arranged to penetrate the chassis hole 15b. At this time, the extending portion 220 of the bar fixer 201 may be arranged to penetrate the chassis hole 15b, and the substrate bar 1220 may be located in front of the chassis hole 15b (+X direction), and the fixing body 210 may be located at the rear (-X direction) of the chassis hole 15b.

Thereafter, as shown in FIGS. 12 and 14, as the bar fixer 201 moves in one direction with respect to the mounting portion 15a and approaches the mounting portion 15a, the fixing body 210 may be in contact with the rear surface of the mounting portion 15a. Particularly, as the bar fixer 201 moves in one direction with respect to the mounting portion 15a and approaches the mounting portion 15a, the interference protrusion 212 of the fixing body 210 may press the mounting portion 15a. At this time, the substrate bar 1220 may be in contact with the front surface of the bottom chassis 15, and the fixing body 210 may be in contact with the rear surface of the bottom chassis 15. Further, the fixing body 210 and the extending portion 220 may be arranged to surround at least a portion of the mounting portion 15a. Accordingly, the bar fixer 201 may be mounted on the mounting portion 15a, and the substrate bar 1220 may be fixed to the bottom chassis 15.

For example, the mounting portion 15a may include a fixing end 15aa connected to other portion of the bottom chassis 15. At this time, as the fixing end 15aa extends from other portion of the bottom chassis 15 toward a direction facing the mounting portion 15a, the fixing end 15aa of the mounting portion 15a may extend in a direction inclined toward the rear (-X direction) that is opposite to a direction, in which the bottom chassis 15 faces the substrate body 1210. By the fixing end 15aa, the mounting portion 15a may be located rearward (-X direction) than other portion of the bottom chassis 15 connected to the fixing end 15aa. When the bar fixer 201 is mounted on the mounting portion 15a, the fixing body 210 may be located at the rear of the mounting portion 15a. Accordingly, an extent, to which the fixing body 210 presses the mounting portion 15a, may further increase by the structure, and the bar fixer 201 may be more firmly mounted on the mounting portion 15a.

As illustrated in FIGS. 11 to 14, the bar fixer 201 may include an inclined guide 240.

The inclined guide 240 may be provided at one end of the bar fixer 201 with respect to a direction in which the bar fixer 201 slides when the bar fixer 201 is mounted on the mounting portion 15a. The inclined guide 240 may guide the movement of the bar fixer 201 to allow the bar fixer 201 to be stably mounted on the mounting portion 15a when the bar fixer 201 slides in the direction in which the bar fixer 201 is mounted on the mounting portion 15a.

Particularly, the inclined guide 240 may be provided at an end of the fixing body 210 with respect to the sliding direction of the fixing body 210 (hereinafter referred to as 'one-directional end of the fixing body 210'). The inclined guide 240 may extend in a direction, which is away from one surface of the bottom chassis 15, from the one-directional end of the fixing body 210 to the sliding movement direction of the fixing body 210. The inclined guide 240 may extend in an inclined direction with respect to the fixing body 210.

With this configuration, when the bar fixer 201 slides toward the mounting portion 15a, the inclined guide 240 may firstly reach the mounting portion 15a before the fixing body 210 reaches the mounting portion 15a. The movement of the bar fixer 201 relative to the mounting portion 15a may be guided due to the inclined structure of the inclined guide 240.

With this configuration, the process of mounting the substrate bar 1220 to the bottom chassis 15 may be performed more efficiently, and manufacturing time and manufacturing costs may be reduced.

Meanwhile, as shown in FIGS. 11 to 14, the above-mentioned structure of the inclined guide 240 of the bar fixer 201 may be provided to be symmetrical with respect to the center of the bar fixer 201. For example, the above-mentioned structure of the inclined guide 240 may be provided to be symmetrical with respect to the center line passing through the center of the bar fixer 201 in the first direction Z. Alternatively, the above-mentioned structure of the inclined guide 240 may be provided to be symmetrical with respect to the center line passing through the center of the bar fixer 201 in the second direction Y. The inclined guide 240 may be provided to have a structure symmetrical with respect to the center of the bar fixer 201, and thus when a work, in which the bar fixer 201 is fixed to the substrate bar 1220, is performed, a restriction due to the direction of the bar fixer 201 about the substrate bar 1220 may be reduced and a manufacturer performing this work may have little consideration for the direction of the bar fixer 201. Work efficiency for coupling the bar fixer 201 to the substrate bar 1220 may be improved and thus manufacturing time and manufacturing costs may be reduced.

The bar fixer 201 may be detachably mounted on the mounting portion 15a. In other words, the bar fixer 201 may be provided to be mountable on the mounting portion 15a and at the same time, the bar fixer 201 may be detachable again from the mounting portion 15a in a state in which the bar fixer 210 is mounted on the mounting portion 15a. That is, while the bar fixer 201 is mounted on the mounting portion 15a, the bar fixer 201 may be separated from the mounting portion 15a by sliding in a direction away from the mounting portion 15a.

With this structure, the substrate bar 1220 may be mounted on the bottom chassis 15 by sliding with respect to the bottom chassis 15, and similarly, the light source substrate 1200 may be mounted on the bottom chassis 15 by sliding with respect to the bottom chassis 15. With this structure, the substrate bar 1220 mounted on the bottom chassis 15 may be separated from the bottom chassis 15 by sliding in a direction that is opposite to a direction in which the substrate bar 1220 is moved when being mounted.

In FIGS. 11 to 14, it is assumed that the substrate bar 1220 moves in the right direction (+Y direction) of the display apparatus 1 with respect to the bottom chassis 15 and is mounted on the bottom chassis 15, but is not limited thereto. For example, the substrate bar 1220 may move in the left direction (-Y direction) of the display apparatus 1 with respect to the bottom chassis 15 and be mounted on the bottom chassis 15. Alternatively, the substrate bar 1220 may move in the vertical direction (Z direction) with respect to the bottom chassis 15 and be mounted on the bottom chassis 15.

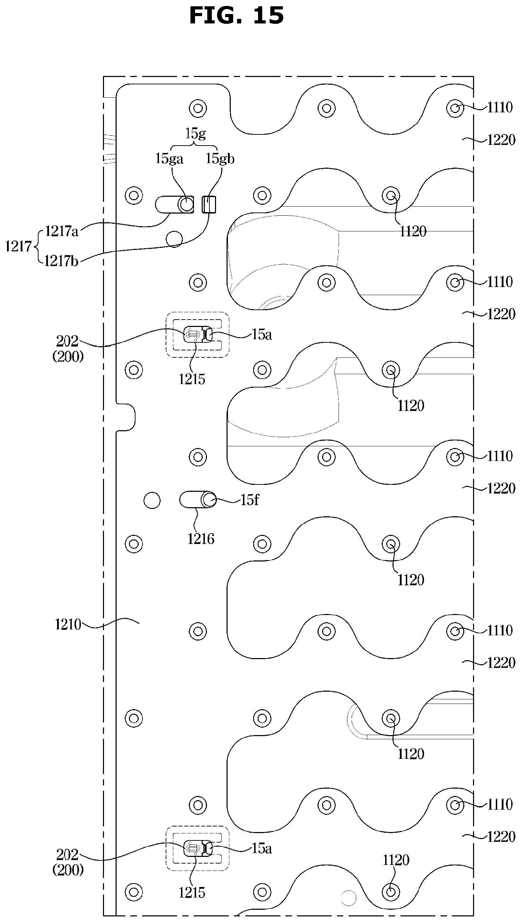

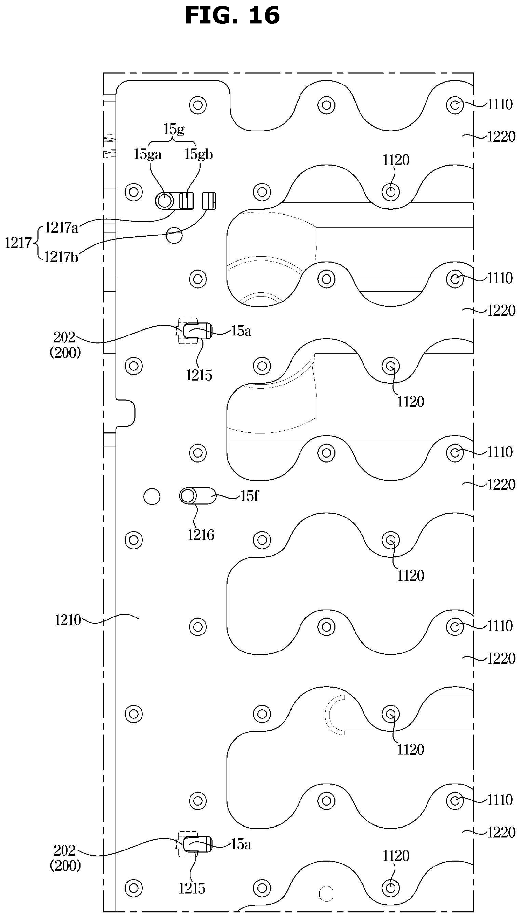

FIG. 15 is an enlarged view of a portion of a substrate body before the light source substrate of the display apparatus according to an embodiment of the present disclosure is mounted on the bottom chassis. FIG. 16 is an enlarged view of a portion of the substrate body after the light source substrate of the display apparatus according to an embodiment of the present disclosure is mounted on the bottom chassis.

Referring to FIGS. 15 and 16, the display apparatus 1 according to one embodiment of the present disclosure may include a body fixer 202. The body fixer 202 may be provided to fix the substrate body 1210 to the bottom chassis 15.

The body fixer 202 may be a type of substrate fixer 200 that mounts the light source substrate 1200 to the bottom chassis 15. The plurality of substrate fixers 200 may include the body fixer 202. That is, a portion of the plurality of substrate fixers 200 (i.e., body fixer 202) may be provided to fix the substrate body 1210 to the bottom chassis 15.

A single substrate body 1210 may be fixed to the bottom chassis 15 by one or more body fixers 202. A single substrate body 1210 may be mounted on the bottom chassis 15 by one or more body fixers 202.

The bottom chassis 15 may include a mounting portion 15a on which the body fixer 202 is mounted. The body fixer 202 may be provided to fix the substrate body 1210 to the bottom chassis 15 by being mounted on the mounting portion 15a. For example, a single body fixer 202 may be mounted on a single mounting portion 15a.

For example, the mounting portion 15a on which the body fixer 202 is mounted may have characteristics corresponding to the mounting portion 15a on which the bar fixer 201 is mounted. That is, the bottom chassis 15 may include a plurality of mounting portions 15a on which the plurality of substrate fixers 200, such as the bar fixer 201 and the body fixer 202, is mounted. For example, a single substrate fixer 200 may be mounted on a single mounting portion 15a.

The substrate body 1210 may include a coupling portion 1215. The substrate body 1210 may be coupled to the bottom chassis 15 through the coupling portion 1215. The body fixer 202 may be disposed in the coupling portion 1215 of the substrate body 1210. To be distinguished from the above-described coupling portion (bar coupling portion) 1225 of the substrate bar 1220, the coupling portion 1215 of the substrate body 1210 may be referred to as 'body coupling portion 1215'.

For example, the coupling portion 1215 of the substrate body 1210 may have a shape corresponding to the coupling portion 1225 of the substrate bar 1220.

For example, one of the coupling portions 1215 provided on the substrate body 1210 and one of the coupling portions 1225 provided on the substrate bar 1220 may be arranged parallel to one direction. Particularly, as shown in FIG. 16, one of the coupling portions 1215 provided on the substrate body 1210 and one of the coupling portions 1225 provided on the substrate bar 1220 may be arranged parallel to the second direction Y.

Accordingly, one body fixer 202 among the plurality of body fixers 202 and one bar fixer 201 among the plurality of bar fixers 201 may be arranged parallel to one direction. Particularly, as shown in FIG. 16, one body fixer 202 of the plurality of body fixers 202 and one bar fixer 201 of the plurality of bar fixers 201 may be arranged parallel to the second direction Y.

For example, the substrate body 1210 may include the plurality of coupling portions 1215. For example, the body fixer 202 may include the plurality of body fixers 202.

Particularly, the body fixer 202 may be coupled to each coupling portion 1215 of the substrate body 1210. That is, the number of coupling portions 1215 may correspond to the number of body fixers 202.

For example, the plurality of coupling portions 1215 provided on a single substrate body 1210 may be arranged parallel to one direction. Particularly, as shown in FIG. 16, the plurality of coupling portions 1215 provided on a single substrate body 1210 may be arranged parallel to the first direction Z.

Therefore, the plurality of body fixers 202 disposed on a single substrate body 1210 may be arranged parallel to one direction. Particularly, as shown in FIG. 16, the plurality of body fixers 202 disposed on a single substrate body 1210 may be arranged parallel to the first direction Z.

As illustrated in FIG. 16, the number of body fixers 201 may be less than or equal to the number of bar fixers 202. Therefore, the number of the plurality of coupling portions 1215 disposed on the substrate body 1210 may be less than or equal to the number of coupling portions 1225 provided on the plurality of substrate bars 1220 connected to a single substrate body 1210.

In comparison with the substrate body 1210, each of the plurality of substrate bars 1220 needs to be more firmly fixed to the bottom chassis 15 due to the structure thereof, and further it is appropriate that each of the plurality of substrate bars 1220 is fixed to the bottom chassis 15 by the bar fixer 201. Therefore, when the number of the plurality of bar fixers 201 is greater than the number of the plurality of body fixers 202, each of the plurality of substrate bars 1220 may be stably fixed to the bottom chassis 15, and it is possible to prevent a case in which the number of body fixers 202 is less than or equal to the number of the plurality of bar fixers 201 and an unnecessarily large number of substrate fixers 200 is disposed on the plurality of body fixers 202.

In one embodiment, the body fixer 202 may have the same structure as the bar fixer 201 described with reference to FIGS. 8 to 14. A detailed description of the structure, such as the shape, of the body fixer 202 will be omitted. However, the present disclosure is not limited thereto, and the body fixer 202 may have characteristics such as a shape different from that of the bar fixer 201 described above.

As described above, by sliding with respect to the mounting portion 15a, the bar fixer 201 may be mounted on the mounting portion 15a or detached from the mounting portion 15a. In the same manner as the bar fixer 201, by sliding with respect to the mounting portion 15a, the body fixer 202 may be mounted on the mounting portion 15a or detached from the mounting portion 15a.

At this time, by sliding in the same direction with respect to the mounting portion 15a, the bar fixer 201 and the body fixer 202 may be mounted to the mounting portion 15a and by sliding in the same direction with respect to the mounting portion 15a, the bar fixer 201 and the body fixer 202 may be separated from the mounting portion 15a. In the drawing, one embodiment, in which the bar fixer 201 and the body fixer 202 are mounted on the mounting portion 15a as the bar fixer 201 and the body fixer 202 move in the right direction (+Y direction) with respect to the mounting portion 15a, and the bar fixer 201 and the body fixer 202 are separated from the mounting portion 15a as the bar fixer 201 and the body fixer 202 move in the left direction (-Y direction) with respect to the mounting portion 15a, is illustrated, but the sliding movement directions of the bar fixer 201 and the body fixer 202 are not limited thereto.

With this configuration, the light source substrate 1200 including the substrate bar 1220 and the substrate body 1210 may be stably fixed to the bottom chassis 15.

Referring to FIGS. 15 and 16, the display apparatus 1 according to one embodiment of the present disclosure may include a substrate guide 1216 provided on the light source substrate 1200 and a chassis guide 15f provided on the bottom chassis 15. For example, the substrate guide 1216 may be provided on the substrate body 1210.

For example, the substrate guide 1216 may have a slit shape, and the chassis guide 15f may have a protrusion shape that may be slidably insertable into the substrate guide 1216. As shown in FIGS. 15 and 16, when the light source substrate 1200 is mounted on the bottom chassis 15, the chassis guide 15f may be movably coupled to the substrate guide 1216, thereby guiding the sliding movement of the substrate body 1210 relative to the bottom chassis 15.

Referring to FIGS. 15 and 16, the display apparatus 1 according to one embodiment of the present disclosure may include a substrate fixing portion 1217 provided on the light source substrate 1200, and a chassis fixing portion 15g provided on the bottom chassis 15. For example, the substrate fixing portion 1217 may be provided on the substrate body 1210.

For example, the substrate fixing portion 1217 may include a first substrate fixing portion 1217a having a slit shape and a second substrate fixing portion 1217b having a hole shape, and the chassis fixing portion 15g may include a first chassis fixing portion 15ga having a protrusion shape that may be slidably inserted into the first substrate fixing portion 1217a, and a second chassis fixing portion 15gb having a protrusion shape that may be inserted into the second substrate fixing portion 1217b or inserted into the first substrate fixing portion 1217a together with the first chassis fixing portion 15ga. As illustrated in FIG. 15, before the light source substrate 1200 is mounted on the bottom chassis 15, the first chassis fixing portion 15ga is inserted into the first substrate fixing portion 1217a and the second chassis fixing portion 15gb is inserted into the second substrate fixing portion 1217b, and thus a position of the light source substrate 1200 relative to the bottom chassis 15 may be aligned. As illustrated in FIG. 16, after the light source substrate 1200 is mounted on the bottom chassis 15, the first chassis fixing portion 15ga and the second chassis fixing portion 15gb may be inserted into the first substrate fixing portion 1217a, and thus the position of the light source substrate 1200 relative to the bottom chassis 15 may be fixed. As the first chassis fixing portion 15ga and the second chassis fixing portion 15gb are inserted into the first substrate fixing portion 1217a, the movement of the light source substrate 1200 along the second direction Y may be restricted.

The display apparatus 1 according to one embodiment of the present disclosure may stably fix the light source substrate 1200 to the bottom chassis 15 through the substrate fixer 200. Accordingly, it is possible to reduce working time and increase productivity compared to a structure coupled by a separate fastening member such as a screw. Further, it is possible to have the advantage of being easy to maintain and/or manage compared to a structure coupled by an adhesive member such as tape.

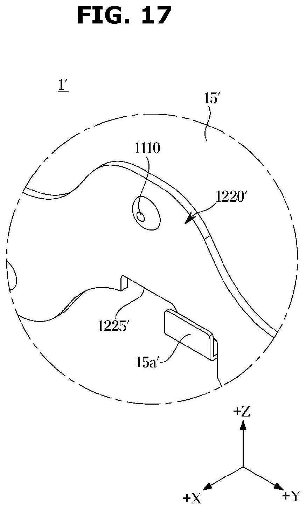

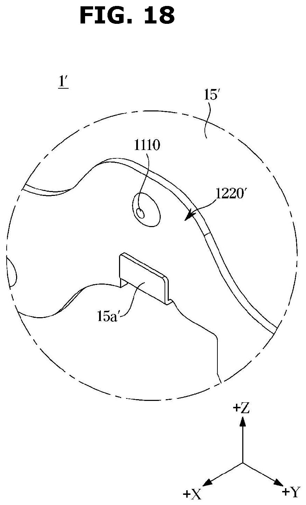

FIG. 17 illustrates a state before a light source substrate of a display apparatus according to an embodiment of the present disclosure is mounted on a bottom chassis. FIG. 18 illustrates a state after the light source substrate of the display apparatus according to an embodiment of the present disclosure is mounted on the bottom chassis.

Referring to FIGS. 17 and 18, a display apparatus 1' according to various embodiments may include a bar coupling portion 1225' provided on a substrate bar 1220' and a mounting portion 15a' provided on a bottom chassis 15'. For example, the bar coupling portion 1225' may have a groove shape, and the mounting portion 15a' may have a hook shape. In the display apparatus illustrated in FIGS. 17 and 18, a substrate fixer 200 may be omitted.

Referring to FIG. 17, before the substrate bar 1220' is mounted on the bottom chassis 15', the bar coupling portion 1225' and the mounting portion 15a' may be positioned apart. Referring to FIG. 18, after the substrate bar 1220' is mounted on the bottom chassis 15', the bar coupling portion 1225' may be coupled to the mounting portion 15a'. As the bar coupling portion 1225' is coupled to the mounting portion 15a', the substrate bar 1220' may be fixed to the bottom chassis 15'.

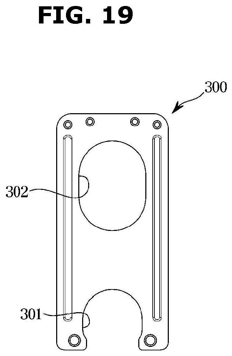

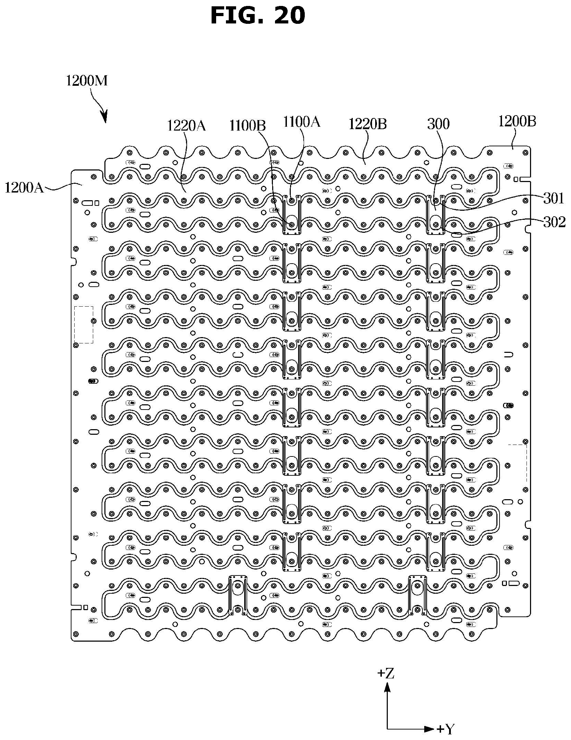

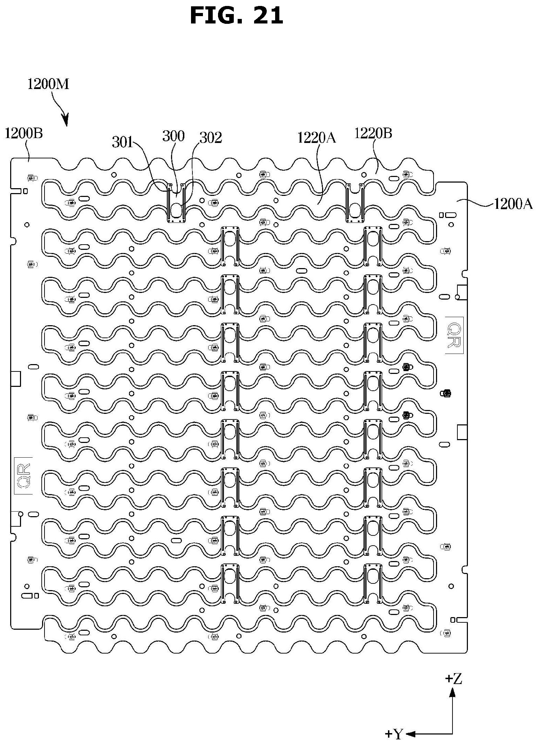

FIG. 19 illustrates a link of the display apparatus according to an embodiment of the present disclosure. FIG. 20 illustrates a front surface of a single substrate material for manufacturing the plurality of light source substrates of the display apparatus according to an embodiment of the present disclosure. FIG. 21 illustrates a rear surface of the single substrate material for manufacturing the plurality of light source substrates of the display apparatus according to an embodiment of the present disclosure.

Referring to FIGS. 6, 7, and 19, a display apparatus 1 according to various embodiments may include a link 300 for connecting a plurality of substrate bars 1220. The plurality of substrate bars 1220 may be more stably supported by the link 300. For example, the link 300 may be connected to each of a pair of adjacent substrate bars 1220, thereby allowing the pair of substrate bars 1220 to be more stably supported. The link 300 may be configured to connect and fix the plurality of substrate bars 1220 in a portion, in which the substrate fixer 200 may not be provided due to structural reasons, so as not to lift, and to maintain overall flatness.

However, the structure for mounting or stably supporting the plurality of substrate bars 1220 on the bottom chassis 15 is not limited to the above structure (substrate fixer 200, link 300, etc.).

For example, the link 300 may include a first link avoidance portion 301. The first link avoidance portion 301 may be provided to prevent interference with a light source 1100 located on one of the substrate bars 1220 to which the link 300 is connected. For example, the first link avoidance portion 301 may have a groove shape.

Referring to FIGS. 19 to 21, the link 300 may include a second link avoidance portion 302. The second link avoidance portion 302 may be provided to prevent interference with a light source provided on a light source substrate 1200B other than the light source substrate 1200A to which the link 300 is connected, while performing a process of manufacturing a plurality of light source substrates 1200A and 1200B from a single substrate material 1200M. For example, the second link avoidance portion 302 may have a hole shape.

For example, referring to FIGS. 20 and 21, the plurality of light source substrates 1200A and 1200B of the display apparatus 1 according to various embodiments may be manufactured from the single substrate material 1200M. The pair of light source substrates 1200A and 1200B may be shown in the single substrate material 1200M in a state in which the pair of light source substrates 1200A and 1200B are inverted 180 degrees relative to each other.

The link 300 may be mounted on the pair of light source substrates 1200A and 1200B in a state in which the pair of light source substrates 1200A and 1200B are cut along the edge thereof. For example, the link 300 may include a first link 300A for connecting the plurality of first substrate bars 1220A of the first light source substrate 1200A and a second link 300B for connecting the plurality of second substrate bars 1220B of the second light source substrate 1200B. The first link 300A may be positioned on a front surface of the first light source substrate 1200A, and the second link 300B may be positioned on a rear surface of the second light source substrate 1200B.

The first link avoidance portion 301 of the first link 300A may be provided so as not to interfere with the first light source 1100A provided on the first substrate bar 1220A. The second avoidance portion 203 of the first link 300A may be provided so as not to interfere with the second light source 1100B provided on the second substrate bar 1220B.

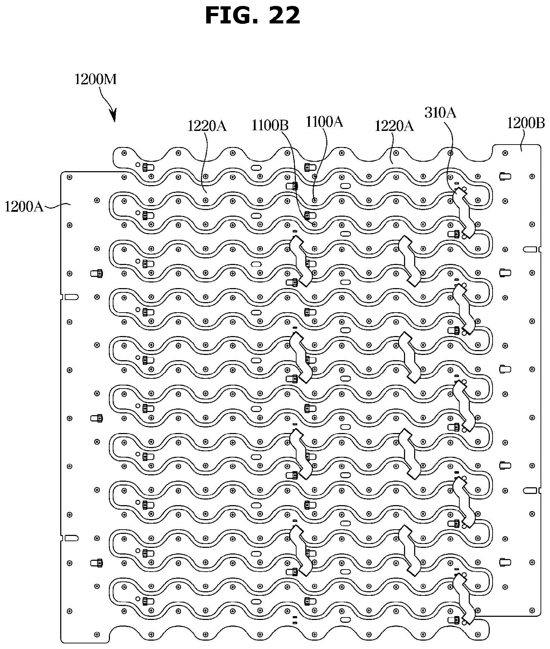

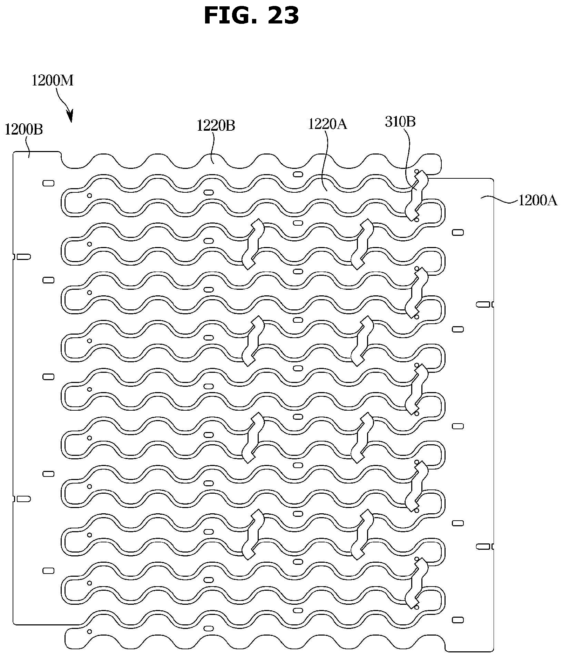

FIG. 22 illustrates a front surface of a single substrate material for manufacturing a plurality of light source substrates of a display apparatus according to an embodiment of the present disclosure. FIG. 23 illustrates a rear surface of the single substrate material for manufacturing the plurality of light source substrates of the display apparatus according to an embodiment of the present disclosure.

Referring to FIGS. 22 and 23, a display apparatus 1 according to various embodiments may include a link 310 for connecting a plurality of substrate bars 1220. The plurality of substrate bars 1220 may be more stably supported by the link 310. For example, the link 310 may be connected to each of a pair of adjacent substrate bars 1220, thereby allowing the pair of substrate bars 1220 to be more stably supported.

For example, unlike the link 300 shown in FIGS. 19 to 21, the link 310 may not include separate link avoidance portions 301 and 302. Referring to FIGS. 22 and 23, the link 310 may be provided to prevent interference with a light source 1100 provided on a plurality of substrate bars 1220. For example, the link 310 may have a shape in which, one end is connected to one of the plurality of substrate bars 1220 and the other end is connected to other of the plurality of substrate bars 1220, and a portion extending between the one end and the other end is bent several times, so as not to interfere with the light source 1100.

Referring to FIGS. 22 and 23, the link 310 may be provided to prevent interference with a light source provided on a light source substrate 1200B other than a light source substrate 1200A to which the link 310 is connected, while performing a process of manufacturing the plurality of light source substrates 1200A and 1200B from a single substrate material 1200M.

For example, the plurality of light source substrates 1200A and 1200B of the display apparatus 1 according to various embodiments may be manufactured from the single substrate material 1200M. The pair of light source substrates 1200A and 1200B may be shown in the single substrate material 1200M in a state in which the pair of light source substrates 1200A and 1200B are inverted 180 degrees relative to each other.

The link 310 may be mounted on the pair of light source substrates 1200A and 1200B in a state in which the pair of light source substrates 1200A and 1200B are cut along the edge thereof. For example, the link 310 may include a first link 310A for connecting a plurality of first substrate bars 1220A of the first light source substrate 1200A and a second link 310B for connecting a plurality of second substrate bars 1220B of the second light source substrate 1200B. The first link 310A may be positioned on a front surface of the first light source substrate 1200A, and the second link 300B may be positioned on a rear surface of the second light source substrate 1200B.

The first link 310A may be provided so as not to interfere with the first light source 1100A provided on the first substrate bar 1220A, and may be provided so as not to interfere with the second light source 1100B provided on the second substrate bar 1220B.

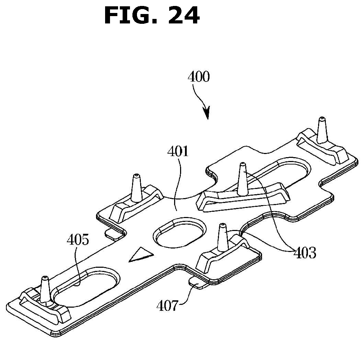

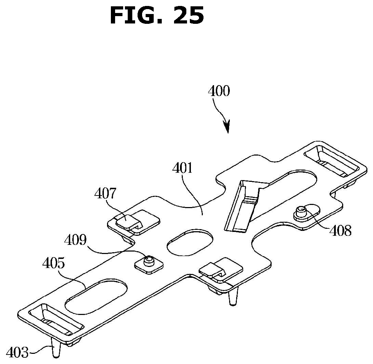

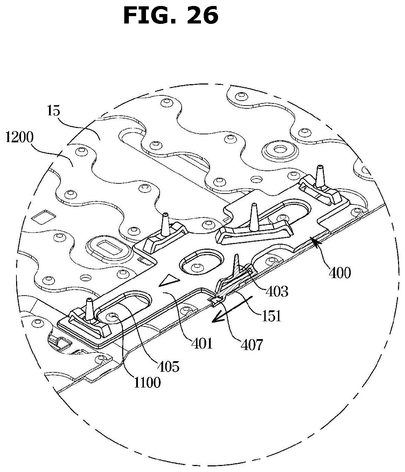

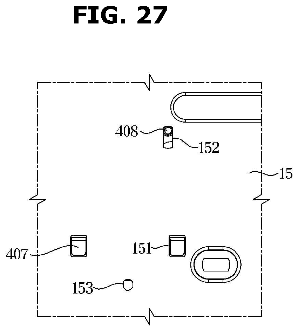

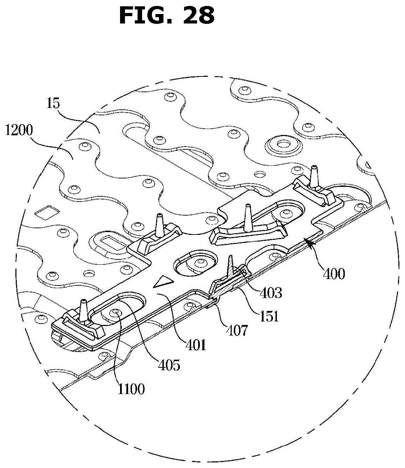

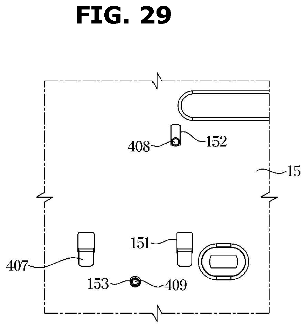

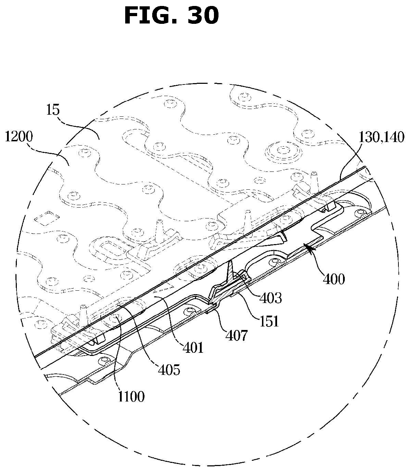

FIG. 24 illustrates an upper portion of a support plate of the display apparatus according to an embodiment of the present disclosure. FIG. 25 illustrates a lower portion of the support plate of the display apparatus according to an embodiment of the present disclosure. FIG. 26 illustrates a portion of a cross-section before mounting the support plate according to an embodiment of the present disclosure to the bottom chassis. FIG. 27 illustrates a portion of a rear surface of the bottom chassis before mounting the support plate according to an embodiment of the present disclosure to the bottom chassis. FIG. 28 illustrates a portion of a cross-section after mounting the support plate according to an embodiment of the present disclosure to the bottom chassis. FIG. 29 illustrates a portion of the rear surface of the bottom chassis after mounting the support plate according to an embodiment of the present disclosure to the bottom chassis. FIG. 30 illustrates a portion of a cross-section illustrating a state in which the support plate according to an embodiment of the present disclosure supports an optical member.

Referring to FIGS. 24 and 25, a display apparatus 1 according to various embodiments may include a support plate 400. The support plate 400 may be mounted on a bottom chassis 15. The support plate 400 may be mounted by sliding on the bottom chassis 15. The support plate 400 may be provided to maintain optical characteristics of a light source module 1000 by maintaining an optical distance between a plurality of light sources 1100 of the light source module 1000 and optical members 130 and 140.

The support plate 400 may include a plate body 401. The plate body 401 may be provided to press a light source substrate 1200 of the light source module 1000 toward the bottom chassis 15 when mounted on the bottom chassis 15. When the support plate 400 is mounted on the bottom chassis 15, the light source substrate 1200 may be positioned between the support plate 400 and the bottom chassis 15. When the support plate 400 is mounted on the bottom chassis 15, as the plate body 401 presses the light source substrate 1200, the light source substrate 1200 may be stably fixed to the bottom chassis 15.

The support plate 400 may include a support portion 403 extending between the optical members 130 and 140 and the light source substrate 1200. The support portion 403 may extend from the plate body 401. The support portion 403 may support a diffuser plate 130 and/or an optical sheet 140. The support portion 403 may be located between the optical members 130 and 140 and the light source substrate 1200. The support portion 403 may be provided with a length for maintaining the optical characteristics of the light source module 1000. For example, the support portion 403 may include a plurality of support portions 403.

The support plate 400 may include a plate avoidance portion 405 provided to prevent interference with the plurality of light sources 1100 of the light source module 1000 when the support plate 400 is mounted on the bottom chassis 15. For example, the plate avoidance portion 405 may have a hole shape. The plate avoidance portion 405 may be provided to correspond to a light source 1100, which is located at a position in which interference is possible when the support plate 400 is mounted on the bottom chassis 15, among the plurality of light sources 1100 of the light source module 1000. For example, the plate avoidance portion 405 may include at least one hole.

The support plate 400 may include a support mounting portion 407 for being mounted on the bottom chassis 15. The support mounting portion 407 may be provided on one side facing the bottom chassis 15 when the support plate 400 is mounted on the bottom chassis 15. The support mounting portion 407 may be provided on one side opposite to one side in which the support portion 403 of the plate body 401 is provided. The support mounting portion 407 may be detachably coupled to a chassis mounting portion 151 provided on the bottom chassis 15. For example, the support mounting portion 407 may have a hook shape, and the chassis mounting portion 151 may have a hole shape into which the support mounting portion 407 may be inserted and slid. When the support mounting portion 407 slides after being inserted into the chassis mounting portion 151, the support mounting portion 407 may be locked and fixed to the chassis mounting portion 151. As the support mounting portion 407 is coupled to the chassis mounting portion 151, the movement of the support plate 400 in the front and rear direction X may be restricted.

The support plate 400 may include a support guide 408 for guiding sliding movement relative to the bottom chassis 15 when the support plate 400 is mounted on the bottom chassis 15. The support guide 408 may be provided on one side facing the bottom chassis 15 when the support plate 400 is mounted on the bottom chassis 15. The support guide 408 may be provided on one side opposite to one side in which the support portion 403 of the plate body 401 is provided. The support guide 408 may be detachably coupled to a movement guide 152 provided on the bottom chassis 15. For example, the support guide 408 may have a protrusion shape, and the movement guide 152 may have a slit shape into which the support guide 408 may be inserted and slid.

The support plate 400 may include a support fixing portion 409 for being fixed to the bottom chassis 15 when the support plate 400 is mounted on the bottom chassis 15. The support fixing portion 409 may be provided on one side facing the bottom chassis 15 when the support plate 400 is mounted on the bottom chassis 15. The support fixing portion 409 may be provided on one side opposite to one side in which the support portion 403 of the plate body 401 is provided. The support fixing portion 409 may be detachably coupled to a chassis coupling portion 153 provided on the bottom chassis 15. For example, the support fixing portion 409 may have a protrusion shape, and the chassis coupling portion 153 may have a hole shape into which the support fixing portion 409 may be inserted.

Referring to FIGS. 26 and 27, in order to mount the support plate 400 to the bottom chassis 15, the support plate 400 may be positioned to allow the support mounting portion 407 to be inserted into the chassis mounting portion 151. Before the support plate 400 is mounted to the bottom chassis 15, the support fixing portion 409 may be separated from the chassis coupling portion 153, and the support guide 408 may be inserted into the movement guide 152.

Referring to FIGS. 28 and 29, the support plate 400 may be mounted on the bottom chassis 15 by sliding the support plate 400 relative to the bottom chassis 15. The support mounting portion 407 may be hooked and coupled to the chassis mounting portion 151. While the support plate 400 is sliding relative to the bottom chassis 15, the support guide 408 may be guided by the movement guide 152. When the support plate 400 is mounted, the support fixing portion 409 may be coupled to the chassis coupling portion 153. As the support fixing portion 409 is coupled to the chassis coupling portion 153, the support plate 400 may be prevented from detaching from the bottom chassis 15.

Referring to FIG. 30, when the support plate 400 is mounted on the bottom chassis 15, the support plate 400 may support optical members 130 and 140 positioned in front of the light source module 1000. When the support plate 400 is mounted on the bottom chassis 15, the support plate 400 may press the light source substrate 1200 of the light source module 1000 toward the bottom chassis 15 and may stably support the light source module 1000.

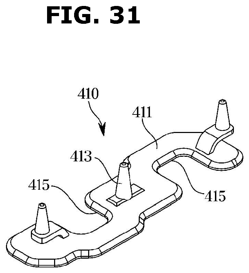

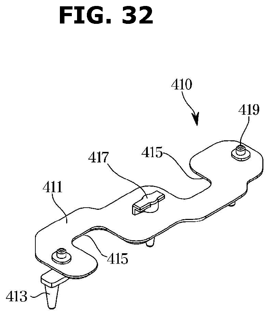

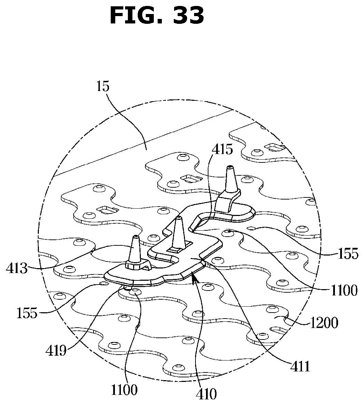

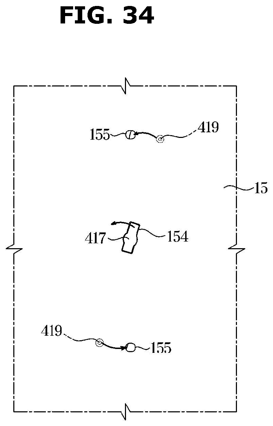

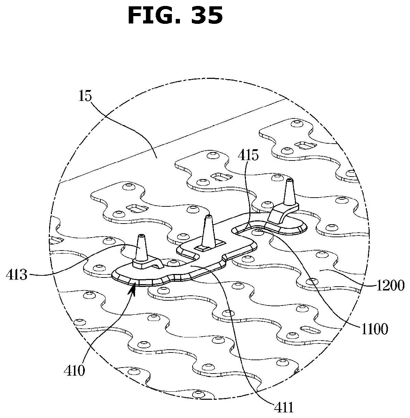

FIG. 31 illustrates an upper portion of a support plate of a display apparatus according to an embodiment of the present disclosure. FIG. 32 illustrates a lower portion of the support plate of the display apparatus according to an embodiment of the present disclosure. FIG. 33 illustrates a state before mounting the support plate according to an embodiment of the present disclosure to a bottom chassis. FIG. 34 illustrates a portion of a rear surface of the bottom chassis before mounting the support plate according to an embodiment of the present disclosure to the bottom chassis. FIG. 35 illustrates a state after mounting the support plate according to an embodiment of the present disclosure to the bottom chassis.

Referring to FIGS. 31 and 32, a display apparatus 1 according to various embodiments may include a support plate 410. The support plate 410 may be mounted on a bottom chassis 15. The support plate 410 may be rotatably mounted on the bottom chassis 15. The support plate 410 may be provided to maintain optical characteristics of a light source module 1000 by maintaining an optical distance between a plurality of light sources 1100 of the light source module 1000 and optical members 130 and 140.

The support plate 410 may include a plate body 411. The plate body 411 may be provided to press a light source substrate 1200 of the light source module 1000 toward the bottom chassis 15 when the support plate 410 is mounted on the bottom chassis 15. When the support plate 410 is mounted on the bottom chassis 15, the light source substrate 1200 may be positioned between the support plate 410 and the bottom chassis 15. When the support plate 410 is mounted on the bottom chassis 15, as the plate body 411 presses the light source substrate 1200, the light source substrate 1200 may be stably fixed to the bottom chassis 15.

The support plate 410 may include a support portion 413 extending between the optical members 130 and 140 and the light source substrate 1200. The support portion 413 may extend from the plate body 411. The support portion 413 may support a diffuser plate 130 and/or an optical sheet 140. The support portion 413 may be located between the optical members 130 and 140 and the light source substrate 1200. The support portion 413 may be provided with a length for maintaining the optical characteristics of the light source module 1000. For example, the support portion 413 may include a plurality of support portions 413.

The support plate 410 may include a plate avoidance portion 416 provided to prevent interference with the plurality of light sources 1100 of the light source module 1000 when the support plate 410 is mounted on the bottom chassis 15. For example, the plate avoidance portion 416 may have a groove shape formed as the plate body 411 is bent several times. The plate avoidance portion 416 may be provided to correspond to a light source 1100 located at a position in which interference is possible when the support plate 410 is mounted on the bottom chassis 15 among the plurality of light sources 1100 of the light source module 1000.

The support plate 410 may include a support mounting portion 417 for being mounted on the bottom chassis 15. The support mounting portion 417 may be provided on one side facing the bottom chassis 15 when the support plate 410 is mounted on the bottom chassis 15. The support mounting portion 417 may be provided on one side opposite to one side in which the support portion 413 of the plate body 411 is provided. The support mounting portion 417 may be detachably coupled to a chassis mounting portion 154 provided on the bottom chassis 15. For example, the support mounting portion 417 may have a protrusion shape, and the chassis mounting portion 154 may have a hole shape into which the support mounting portion 417 is inserted and rotatable. The chassis mounting portion 154 may be provided to allow the support mounting portion 417 to pass therethrough when the support mounting portion 417 is in a predetermined position.

The support plate 410 may include a support fixing portion 419 for being fixed to the bottom chassis 15 when the support plate 410 is mounted on the bottom chassis 15. The support fixing portion 419 may be provided on one side facing the bottom chassis 15 when the support plate 410 is mounted on the bottom chassis 15. The support fixing portion 419 may be provided on one side opposite to one side in which the support portion 413 of the plate body 411 is provided. The support fixing portion 419 may be detachably coupled to a chassis coupling portion 155 provided on the bottom chassis 15. For example, the support fixing portion 419 may have a protrusion shape, and the chassis coupling portion 155 may have a hole shape into which the support fixing portion 419 may be inserted.

Referring to FIGS. 33 and 34, in order to mount the support plate 410 to the bottom chassis 15, the support plate 410 may be positioned to allow the support mounting portion 417 to be inserted into the chassis mounting portion 154. Before the support plate 410 is mounted to the bottom chassis 15, the support fixing portion 419 may be separated from the chassis coupling portion 155.

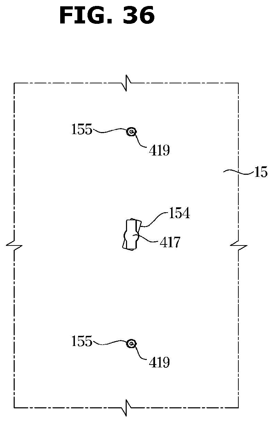

Referring to FIGS. 35 and 36, the support plate 410 may be mounted on the bottom chassis 15 by rotating the support plate 410 relative to the bottom chassis 15. The support mounting portion 417 may interfere with the chassis mounting portion 154 to prevent separation from the chassis mounting portion 154. When the support plate 410 is mounted, the support fixing portion 419 may be coupled to the chassis coupling portion 155. As the support fixing portion 419 is coupled to the chassis coupling portion 155, the support plate 410 may be prevented from detaching from the bottom chassis 15.

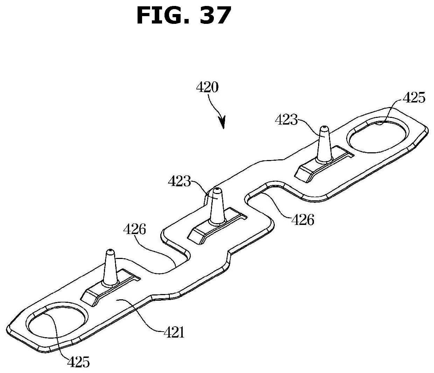

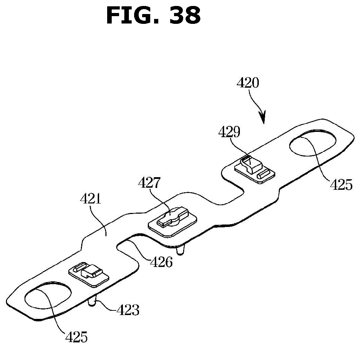

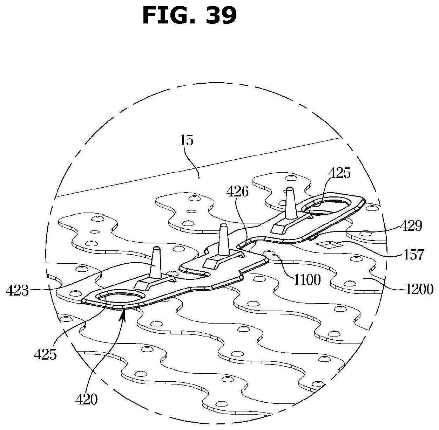

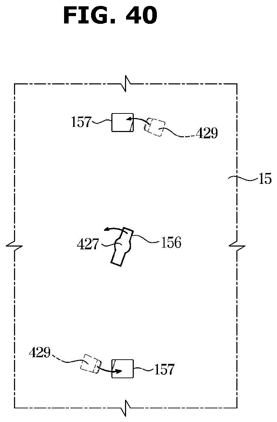

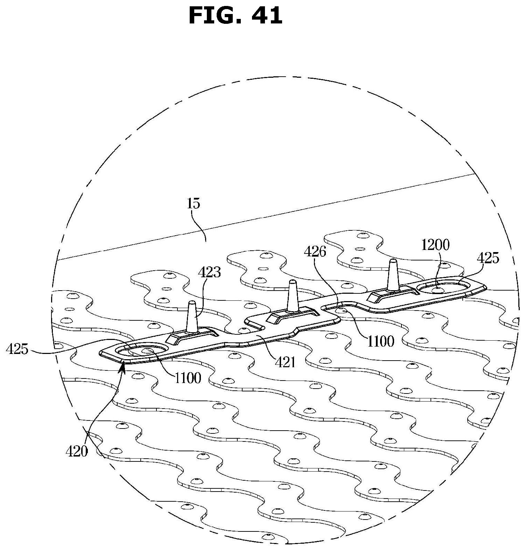

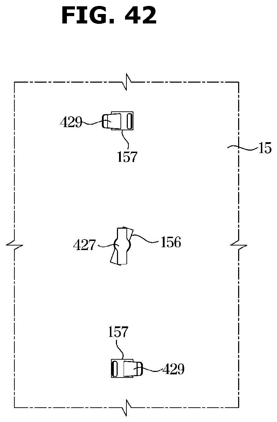

FIG. 37 illustrates an upper portion of a support plate of a display apparatus according to an embodiment of the present disclosure. FIG. 38 illustrates a lower portion of the support plate of the display apparatus according to an embodiment of the present disclosure. FIG. 39 illustrates a state before mounting the support plate according to an embodiment of the present disclosure to a bottom chassis. FIG. 40 illustrates a portion of a rear surface of the bottom chassis before mounting the support plate according to an embodiment of the present disclosure to the bottom chassis. FIG. 41 illustrates a state after mounting the support plate according to an embodiment of the present disclosure to the bottom chassis. FIG. 42 illustrates a portion of the rear surface of the bottom chassis after mounting the support plate according to an embodiment of the present disclosure to the bottom chassis.

Referring to FIGS. 37 and 38, a display apparatus 1 according to various embodiments may include a support plate 420. The support plate 420 may be mounted on a bottom chassis 15. The support plate 420 may be rotatably mounted on the bottom chassis 15. The support plate 420 may be provided to maintain optical characteristics of a light source module 1000 by maintaining an optical distance between a plurality of light sources 1100 of the light source module 1000 and optical members 130 and 140.

The support plate 420 may include a plate body 421. The plate body 421 may be provided to press a light source substrate 1200 of the light source module 1000 toward the bottom chassis 15 when the support plate 420 is mounted on the bottom chassis 15. When the support plate 420 is mounted on the bottom chassis 15, the light source substrate 1200 may be positioned between the support plate 420 and the bottom chassis 15. When the support plate 420 is mounted on the bottom chassis 15, as the plate body 421 presses the light source substrate 1200, the light source substrate 1200 may be stably fixed to the bottom chassis 15.

The support plate 420 may include a support portion 423 extending between the optical members 130 and 140 and the light source substrate 1200. The support portion 423 may extend from the plate body 421. The support portion 423 may support a diffuser plate 130 and/or an optical sheet 140. The support portion 423 may be located between the optical members 130 and 140 and the light source substrate 1200. The support portion 423 may be provided with a length for maintaining the optical characteristics of the light source module 1000. For example, the support portion 423 may include a plurality of support portions 423.

The support plate 420 may include a first plate avoidance portion 425 provided to prevent interference with the plurality of light sources 1100 of the light source module 1000 when the support plate 400 is mounted on the bottom chassis 15. For example, the first plate avoidance portion 425 may have a hole shape. The first plate avoidance portion 425 may be provided to correspond to a light source 1100, which is located at a position in which interference is possible when the support plate 400 is mounted on the bottom chassis 15, among the plurality of light sources 1100 of the light source module 1000. For example, the first plate avoidance portion 425 may include at least one hole.

The support plate 420 may include a second plate avoidance portion 426 provided to prevent interference with the plurality of light sources 1100 of the light source module 1000 when the support plate 420 is mounted on the bottom chassis 15. For example, the second plate avoidance portion 426 may have a groove shape formed as the plate body 421 is bent several times. The second plate avoidance portion 426 may be provided to correspond to a light source 1100 located at a position in which interference is possible when the support plate 420 is mounted on the bottom chassis 15 among the plurality of light sources 1100 of the light source module 1000.

The support plate 420 may include a support mounting portion 427 for being mounted on the bottom chassis 15. The support mounting portion 427 may be provided on one side facing the bottom chassis 15 when the support plate 420 is mounted on the bottom chassis 15. The support mounting portion 427 may be provided on one side opposite to one side in which the support portion 423 of the plate body 421 is provided. The support mounting portion 427 may be detachably coupled to a chassis mounting portion 156 provided on the bottom chassis 15. For example, the support mounting portion 427 may have a protrusion shape, and the chassis mounting portion 156 may have a hole shape into which the support mounting portion 427 is inserted and rotatable. The chassis mounting portion 156 may be provided to allow the support mounting portion 427 to pass therethrough when the support mounting portion 427 is in a predetermined position.

The support plate 420 may include a support fixing portion 429 for being fixed to the bottom chassis 15 when the support plate 420 is mounted on the bottom chassis 15. The support fixing portion 429 may be provided on one side facing the bottom chassis 15 when the support plate 420 is mounted on the bottom chassis 15. The support fixing portion 429 may be provided on one side opposite to one side in which the support portion 423 of the plate body 421 is provided. The support fixing portion 429 may be detachably coupled to a chassis coupling portion 157 provided on the bottom chassis 15. For example, the support fixing portion 429 may have a hook shape, and the chassis coupling portion 157 may have a hole shape into which the support fixing portion 429 may be inserted and slid. When the support fixing portion 429 slides after being inserted into the chassis coupling portion 157, the support fixing portion 429 may be locked and fixed to the chassis coupling portion 157.

Referring to FIGS. 39 and 40, in order to mount the support plate 420 to the bottom chassis 15, the support plate 420 may be positioned to allow the support mounting portion 427 to be inserted into the chassis mounting portion 156. Before the support plate 420 is mounted to the bottom chassis 15, the support fixing portion 429 may be separated from the chassis coupling portion 157.

Referring to FIGS. 41 and 42, the support plate 420 may be mounted on the bottom chassis 15 by rotating the support plate 420 relative to the bottom chassis 15. The support mounting portion 427 may interfere with the chassis mounting portion 156 to prevent separation from the chassis mounting portion 156. When the support plate 420 is mounted, the support fixing portion 429 may be hooked and coupled to the chassis coupling portion 157. As the support fixing portion 429 is coupled to the chassis coupling portion 157, the support plate 420 may be prevented from detaching from the bottom chassis 15.

A display apparatus 1 according to an embodiment includes a display panel 20, a plurality of light sources 1100 configured to provide light to the display panel, a plurality of light source substrates 1200 on which the plurality of light sources is mounted, a bottom chassis 15 supporting the plurality of light source substrates, optical members 130 and 140 disposed between the display panel and the plurality of light sources, and a support plate 400 detachably mounted on the bottom chassis. The support plate includes a support portion 403 for maintaining an optical distance between the plurality of light sources and the optical member, and a plate avoidance portion 405 formed to prevent interference with the plurality of light sources in response to the support plate being mounted on the bottom chassis.

The plate avoidance portion may have a hole shape or a groove shape.

The support plate may include a plate body 401 provided to press at least one of the plurality of light source substrates toward the bottom chassis in response to the support plate being mounted on the bottom chassis.

The bottom chassis may include a chassis mounting portion 151. The support plate may include a support mounting portion 407 provided to be hooked and coupled to the chassis mounting portion by sliding relative to the bottom chassis.

The bottom chassis may include a chassis mounting portion 154 or 156. The support plate may include a support mounting portion 417 or 427 provided to pass through the chassis mounting portion, and provided to be rotatable to a position in which the support mounting portion is prevented from detaching from the chassis mounting portion in response to passing through the chassis mounting portion.

The bottom chassis may include a chassis coupling portion 153. The support plate may include a support fixing portion 409 for fixing the support plate to the bottom chassis by coupling to the chassis coupling portion in response to the support plate being mounted on the bottom chassis.

The support fixing portion may be provided to be pressed by at least one of the plurality of light source substrates and provided to deform a portion of the support plate so as to prevent interference between the support plate and at least one of the plurality of light sources while the support plate is being mounted on the bottom chassis.

The bottom chassis may include a movement guide 152. The support plate may include a support guide 408 provided to be slidably insertable into the movement guide and for guiding mounting of the support plate.

The display apparatus may further include a plurality of substrate fixers 200 provided to fix the plurality of light source substrates to the bottom chassis. The bottom chassis may include a plurality of mounting portions 15a to which the plurality of substrate fixers is detachably mounted.

At least one of the plurality of substrate fixers may include an interference protrusion 212 provided to, in response to being mounted on one of the plurality of mounting portions, press the one of the plurality of mounting portions toward the plurality of light source substrates.

At least one of the plurality of substrate fixers may include an inclined guide 240 for guiding the mounting portion while the mounting portion is mounted.

The bottom chassis may include a mounting portion 15a' having a hook shape. The plurality of light source substrates may include a bar coupling portion 1225' coupled to the mounting portion in response to being mounted to the bottom chassis.

The display apparatus may further include a link 300 for connecting a plurality of substrate bars provided on each of the plurality of light source substrates.

The link may include a link avoidance portion 301 or 302 formed to prevent interference with a plurality of light sources mounted on the plurality of substrate bars in response to being connected to the plurality of substrate bars.

The link may include a first link 300A for connecting a plurality of substrate bars provided on one light source substrate among the plurality of light source substrates, and a second link 300B for connecting a plurality of substrate bars provided on another light source substrate among the plurality of light source substrates.

A display apparatus 1 according to an embodiment includes a display panel, a plurality of light sources configured to provide light to the display panel, a plurality of light source substrates on which the plurality of light sources is mounted, a bottom chassis supporting the plurality of light source substrates, a plurality of substrate fixers provided to fix the plurality of light source substrates to the bottom chassis, an optical member disposed between the display panel and the plurality of light sources, and a support plate detachably mounted on the bottom chassis. The support plate includes a support portion for maintaining an optical distance between the plurality of light sources and the optical member, and a plate body provided to press at least one of the plurality of light source substrates to the bottom chassis in response to the support plate being mounted to the bottom chassis.

The support plate may include a plate avoidance portion formed to prevent interference with the plurality of light sources in response to the support plate being mounted on the bottom chassis.

The bottom chassis may include a chassis mounting portion. The support plate may include a support mounting portion provided to be hooked and coupled to the chassis mounting portion by sliding relative to the bottom chassis.

The bottom chassis may include a plurality of mounting portions to which the plurality of substrate fixers is detachably mounted.

The display apparatus may further include a link for connecting a plurality of substrate bars provided on each of the plurality of light source substrates.

As is apparent from the above description, a display apparatus may detachably mount a support plate, which is for maintaining an optical distance, to a bottom chassis, thereby improving an assembly structure and making maintenance and/or repair easier.

Further, a display apparatus may detachably mount a light source substrate to a bottom chassis, thereby improving an assembly structure and making maintenance and/or repair easier.

Further, when a support plate for maintaining an optical distance is mounted on a bottom chassis, a display apparatus may support a light source substrate, thereby improving structural stability.

Additional aspects of the disclosure will be set forth in part in the description which follows and, in part, will be obvious from the description, or may be learned by practice of the disclosure.

While the present disclosure has been particularly described with reference to exemplary embodiments, it should be understood by those of skilled in the art that various changes in form and details may be made without departing from the spirit and scope of the present disclosure.

## Claims

1. A display apparatus comprising:
a display panel;
a plurality of light sources configured to provide light to the display panel;
a plurality of light source substrates on which the plurality of light sources is mounted;
a bottom chassis supporting the plurality of light source substrates;
an optical member disposed between the display panel and the plurality of light sources; and
a support plate detachably mounted on the bottom chassis,
wherein the support plate comprises:
a support portion for maintaining an optical distance between the plurality of light sources and the optical member; and
a plate avoidance portion formed to prevent interference with the plurality of light sources when the support plate is mounted on the bottom chassis.

2. The display apparatus of claim 1, wherein
the plate avoidance portion has a hole shape or a groove shape.

3. The display apparatus of claim 1, wherein
the support plate comprises a plate body provided to press at least one of the plurality of light source substrates toward the bottom chassis when the support plate is mounted on the bottom chassis.

4. The display apparatus of claim 1, wherein
the bottom chassis comprises a chassis mounting portion,
wherein the support plate comprises a support mounting portion provided to be hooked and coupled to the chassis mounting portion by sliding relative to the bottom chassis.

5. The display apparatus of claim 1, wherein
the bottom chassis comprises a chassis mounting portion,
wherein the support plate comprises a support mounting portion provided to pass through the chassis mounting portion, the support mounting portion being rotatable to a position in which the support mounting portion is prevented from detaching from the chassis mounting portion when passed through the chassis mounting portion.

6. The display apparatus of claim 1, wherein
the bottom chassis comprises a chassis coupling portion,
wherein the support plate comprises a support fixing portion for fixing the support plate to the bottom chassis by coupling to the chassis coupling portion when the support plate is mounted on the bottom chassis.

7. The display apparatus of claim 6, wherein
the support fixing portion is provided to be pressed by at least one of the plurality of light source substrates and provided to deform a portion of the support plate, so as to prevent interference between the support plate and at least one of the plurality of light sources while the support plate is being mounted on the bottom chassis.

8. The display apparatus of claim 1, wherein
the bottom chassis comprises a movement guide,
wherein the support plate comprises a support guide provided to be slidably insertable into the movement guide, the support guide being configured to guide mounting of the support plate.

9. The display apparatus of claim 1, further comprising:
a plurality of substrate fixers provided to fix the plurality of light source substrates to the bottom chassis,
wherein the bottom chassis comprises a plurality of mounting portions to which the plurality of substrate fixers is detachably mounted.

10. The display apparatus of claim 9, wherein
at least one of the plurality of substrate fixers comprises an interference protrusion provided to press the one of the plurality of mounting portions toward the plurality of light source substrates when the at least one of the plurality of substrate fixers is mounted to the one of the plurality of mounting portions.

11. The display apparatus of claim 9, wherein
at least one of the plurality of substrate fixers comprises an inclined guide for guiding the mounting portion while the mounting portion is mounted.

12. The display apparatus of claim 1, wherein
the bottom chassis comprises a mounting portion having a hook shape,
wherein the plurality of light source substrates comprises a bar coupling portion coupled to the mounting portion when the plurality of light source substrates are mounted to the bottom chassis.

13. The display apparatus of claim 1, further comprising:
a link for connecting a plurality of substrate bars provided on each of the plurality of light source substrates.

14. The display apparatus of claim 13, wherein
the link comprises a link avoidance portion formed to prevent interference with a plurality of light sources mounted on the plurality of substrate bars when the link is connected to the plurality of substrate bars.

15. The display apparatus of claim 13, wherein
the link comprises
a first link for connecting a plurality of substrate bars provided on one light source substrate among the plurality of light source substrates; and
a second link for connecting a plurality of substrate bars provided on another light source substrate among the plurality of light source substrates.
